(19) Europäisches Patentamt

European Patent Office

Office européen des brevets

(11) **EP 4 707 766 A1**

(12) **EUROPEAN PATENT APPLICATION**

(43) Date of publication:
**11.03.2026  Bulletin 2026/11**

(21) Application number: **25202967.3**

(22) Date of filing: **20.03.2023**

(51) International Patent Classification (IPC):
**G01M 9/06** *(2006.01)*        **G01M 15/14** *(2006.01)*
**B64F 5/60** *(2017.01)*

(52) Cooperative Patent Classification (CPC):
**G01M 9/062; B64F 5/60; G01M 15/14;**
F05D 2260/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **07.04.2022   US 202263328537 P
15.03.2023   US 202318121806**

(62) Document number(s) of the earlier application(s) in
accordance with Art. 76 EPC:
**23162829.8 / 4 269 977**

(71) Applicant: **General Electric Company
Cincinnati, Ohio 45215 (US)**

(72) Inventors:
• **TWEEDT, Daniel
Schenectady, 12345 (US)**
• **BREEZE-STRINGFELLOW, Andrew
Evendale, 45215-1988 (US)**
• **KHALID, Syed Arif
Evendale, 45241 (US)**
• **SOLOMON, William
Evendale, 45241 (US)**
• **HILLS, Alexander
Evendale, 45215-1988 (US)**

(74) Representative: **Openshaw & Co.
8 Castle Street
Farnham, Surrey GU9 7HR (GB)**

Remarks:
This application was filed on 18.09.2025 as a
divisional application to the application mentioned
under INID code 62.

(54) **SYSTEM AND METHOD FOR TESTING AIRCRAFT ENGINES**

(57)    A flow conditioning structure (104) is disposed about a central axis (146) of an unducted thrust producing apparatus (102). The unducted thrust producing apparatus (102) has a propeller that generates thrust in a working fluid (503) by rotating about the central axis (146). The propeller is comprised of blades (140) each with a free end. Each blade also has a leading edge where the working fluid enters during forward thrust operation. The flow conditioning structure (104) comprises a structure forming a passage and the structure forming the passage controls a speed and a direction of the working fluid (503) drawn into the unducted thrust producing apparatus (102) so as to approximate operational speeds and operational directions of the working fluid (503) entering the unducted thrust producing apparatus (102) during operations of a vehicle.

**EP 4 707 766 A1**

## Description

Cross-reference to related application

This application claims the benefit of the following: U.S. Provisional Application 63/328,537 filed on April 7, 2022, the contents of which are incorporated herein by reference in their entirety.

Technical Field

The present disclosure relates generally to the testing of aircraft engines and can be applied to testing of propellers.

Background

Testing is used to determine whether aircraft engines operate properly. Various operation conditions need to be simulated for an aircraft engine to be tested. The closer the tests can simulate actual operation conditions, the better the results and the better the ability to find and correct problems in the engines.

Brief Description of the Drawings

Various needs are at least partially met through provision of the method and apparatus for testing aircraft engines in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:

FIG. 1A comprises a diagram as configured in accordance with various embodiments of these teachings;

FIG. 1B comprises a diagram as configured in accordance with various embodiments of these teachings;

FIG. 1C comprises a diagram as configured in accordance with various embodiments of these teachings;

FIG. 1D comprises a diagram as configured in accordance with various embodiments of these teachings;

FIG. 2A comprises a diagram as configured in accordance with various embodiments of these teachings;

FIG. 2B comprises a diagram as configured in accordance with various embodiments of these teachings;

FIG. 2C comprises a diagram as configured in accordance with various embodiments of these teachings;

FIG. 2D comprises a diagram as configured in accordance with various embodiments of these teachings;

FIG. 2E comprises a diagram as configured in accordance with various embodiments of these teachings;

FIG. 2F comprises a diagram as configured in accordance with various embodiments of these teachings;

FIG. 3A comprises a diagram as configured in accordance with various embodiments of these teachings;

FIG. 3B comprises a diagram as configured in accordance with various embodiments of these teachings;

FIG. 4 comprises a diagram as configured in accordance with various embodiments of these teachings;

FIG. 5A comprises a diagram as configured in accordance with various embodiments of these teachings;

FIG. 5B comprises a diagram as configured in accordance with various embodiments of these teachings;

FIG. 5C comprises a diagram as configured in accordance with various embodiments of these teachings;

FIG. 5D comprises a diagram as configured in accordance with various embodiments of these teachings;

FIG. 5E comprises a diagram as configured in accordance with various embodiments of these teachings;

FIG. 5F comprises a diagram as configured in accordance with various embodiments of these teachings;

FIG. 5G comprises a diagram as configured in accordance with various embodiments of these teachings;

FIG. 5H comprises a diagram as configured in accordance with various embodiments of these teachings;

FIG. 5I comprises a diagram as configured in accordance with various embodiments of these teachings;

FIG. 5J comprises a diagram as configured in accordance with various embodiments of these teachings;

FIG. 5K comprises a diagram as configured in accordance with various embodiments of these teachings;

FIG. 5L comprises a diagram as configured in accordance with various embodiments of these teachings;

FIG. 5M comprises a diagram as configured in accordance with various embodiments of these teachings;

FIG. 5N comprises a diagram as configured in accordance with various embodiments of these teachings;

FIG. 5O comprises a diagram as configured in accordance with various embodiments of these teachings;

FIG. 5P comprises a diagram as configured in accordance with various embodiments of these teachings;

FIG. 5Q comprises a diagram as configured in accordance with various embodiments of these teachings;

FIG. 5R comprises a diagram as configured in accordance with various embodiments of these teachings;

FIG. 6 comprises a diagram as configured in accordance with various embodiments of these teachings;

FIG. 7 comprises a diagram as configured in accordance with various embodiments of these teachings;

FIG. 8 comprises a flow diagram as configured in accordance with various embodiments of these teachings;

FIG. 9 comprises a diagram as configured in accordance with various embodiments of these teachings;

FIG. 10A comprises a diagram as configured in accordance with various embodiments of these teachings;

FIG. 10B comprises a flow diagram and diagram as configured in accordance with various embodiments of these teachings;

FIG.11 comprises a diagram as configured in accordance with various embodiments of these teachings;

FIG. 12 comprises a diagram as configured in accordance with various embodiments of these teachings;

FIG. 13A comprises a diagram as configured in accordance with various embodiments of these teachings;

FIG. 13B comprises a diagram as configured in accordance with various embodiments of these teachings;

FIG. 13C comprises a diagram as configured in accordance with various embodiments of these teachings;

FIG. 13D comprises a diagram as configured in accordance with various embodiments of these teachings;

FIG. 13E comprises a diagram as configured in accordance with various embodiments of these teachings;

FIG. 13F comprises a diagram as configured in accordance with various embodiments of these teachings;

FIG. 13G comprises a diagram as configured in accordance with various embodiments of these teachings; and

FIG. 13H comprises a diagram as configured in accordance with various embodiments of these teachings;

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

Detailed Description

The approaches provided herein provide passive and stationary test enabling hardware, structures, or devices that are utilized to increase the power absorption capability of an unducted fan or propeller (the terms "propeller" or "unducted fan" are used interchangeably herein) in or associated with an unducted thrust producing apparatus such as an unducted aircraft engine during ground or static testing. "Passive" as used herein means that a structure functions without power input other than the power to the fan or propeller itself. The passive test enabling hardware (also referred to as "testing hardware" or "flow conditioning structure" herein) provided herein is effective to accelerate and/or constrain the direction of the flow entering the propeller or fan to approximate the speed and direction of working fluid (e.g., air) when the vehicle (e.g., an aircraft) is moving at a forward speed condition. Non-passive approaches are also provided and these may augment the passive arrangements.

More specifically, the structures are comprised of surfaces that are sized and shaped to turn the flow entering the propeller tip to reduce its radially inward velocity component and increase its axial velocity component. Axial velocity is the component in the direction parallel to the central axis of rotation of the propeller, positive in the direction toward aft of the propeller. Radially inward velocity is the component perpendicular to the axial velocity that is toward the central axis of rotation of the propeller. For example, without the flow conditioning structure, the working fluid entering the tip region of the propeller, e.g., the region 90% of the distance from the hub to the tip, could have an axial velocity component much less than a vehicle forward speed that the test is to simulate, possibly even being negative. However, utilizing the flow conditioning structure enables the same region to have an axial velocity that is within 30% of the forward speed of the vehicle. Also, without the flow conditioning structure, the flow entering the tip of the propeller may have lower axial velocity component than the radially inward velocity component. However, with the flow conditioning structure, the axial velocity may be greater than the magnitude of the radial velocity. Thus, in some examples, the working fluid (e.g., air) entering the propeller or fan approximates the flow speed and direction corresponding to a vehicle condition (e.g., an aircraft flight condition such as takeoff).

As described herein, the propeller or propeller assembly includes propeller blades along with the structures supporting the blades. The propellers or propeller assemblies can be part of unducted thrust producing apparatuses such as unducted aircraft engines, electric motors, electric engines, or turbine engines, as well as boat and submarine propulsors to mention a few examples. The testing approaches provided herein test all of these structures and machines, that is, everything from the propeller on its own, a rig model of the propeller or portion of the unducted thrust producing apparatus, to the complete machine comprised of a propeller.

Advantageously, the present approaches allow higher power to be used during engine testing, in particular, for engines having a propeller blades with high aerodynamic loading, e.g., single rotation open rotor or open fan. More thorough engine testing and propeller aerodynamic and aeromechanics validation can be performed, allowing issues or problems with the engine to be identified and mitigated before flight tests occur. In some aspects, the approaches could include a turbulence control structure and could enable certification tests (e.g., hail, bird strike, and icing) to be more accurately performed.

In further advantages, the testing hardware of the present approaches reduces or eliminates the risk of stall that under previous approaches limited the effectiveness of on-ground testing. Under previous approaches, propellers may stall at static conditions. This limits the propeller's ability to absorb full power capacity of the core of the unducted engine. Stall may prevent previous approaches from operating the engine at full power, for example, by pulling air into the tip of the blade (from the radial direction). Stall also, under some circumstances, may cause the blades to flap or flutter in these previous approaches. In aspects, the present approaches are utilized to increase the power absorption capability of a propeller in an unducted aircraft engine during ground testing of an unducted engine by reducing or eliminating stall.

In the case of marine propellers, as for boats and submarines, testing these statically can lead to undesirable flows from above the propeller causing ingestion of air from the surface. Thus, for these applications as well, it is desirable to test the propeller in a way that more closely resembles forward motion conditions.

The approaches described herein are particularly applicable to unducted aircraft engines and engines that utilize propellers. In a ducted turbofan engine operates on the principle that a central gas turbine core drives a bypass fan, the fan being located at a radial location between a fan duct and the engine core. In other words, the duct at least partially covers, encloses, or encases the fan blades. In contrast, an unducted propulsion system operates on the principle of having the bypass fan not located within a fan duct. Removal of the fan duct permits the use of larger fan blades able to act upon a larger volume of air than a bypass fan located within a fan duct. An unducted propulsion system can have an improved propulsive efficiency over a ducted turbofan engine.

In some examples, the unducted engine includes a forward rotating blade assembly and an aft stationary blade assembly. However, other configurations are possible. For example, instead of being a forward rotating blade assembly and an aft stationary blade assembly as described and depicted herein, the two blade assemblies could be counter-rotating with respect to one another. As another example, the forward blade assembly could be stationary and the aft blade assembly could be rotating. As another example, the unducted propulsion system may be comprised of only a rotating blade assembly, e.g., a propeller or propeller assembly.

In aspects and according to the approaches presented herein, ground-based testing hardware (e.g., the flow conditioning structures described herein) is utilized to provide conditions to test an unducted aircraft engine on the ground under conditions that are closer to actual forward speed or flight conditions than otherwise possible and reduce or eliminate the risk of propeller stall. This requires that the flow of air entering the propeller be increased in axial velocity to levels as if the engine were in forward motion or flight. To enable this simulation, the present approaches include passive test enabling hardware that allows these flight-like conditions to be simulated. In aspects and as described in greater detail below, this hardware may be a duct positioned upstream of the propeller assembly of the engine. For the structure or structures that condition the flow entering the propeller (some structures may be for other purposes including, but not limited to, rigidity or mounting to the ground), the surfaces may be viewed in the axial-radial plane section that includes the propeller central axis of rotation. As will be illustrated in examples herein, the surfaces form a passage or passages that have entrances that may be curved or rounded to facilitate smooth and low pressure loss entrance of the air flow. The passage or passages may be comprised of surfaces that comprise the propeller, such as the surfaces of the spinner and hub to which the blades are attached.

In some examples, the hardware (e.g., the flow conditioning structures described herein) may have a bell mouth opening without an upstream fan bank. In other aspects, the hardware inlet shape may be rounded continuously from the exterior to the interior, similar to a nacelle on a ducted turbofan engine forward of the propeller. Such a device could be used with an upstream fan bank enabling the both the interior and exterior surfaces of duct to condition the flow provided by the fan bank to the unducted thrust producing apparatus. As discussed elsewhere herein, various variations of the ducts-so-provided are possible.

In further examples, the hardware may include pre-swirl vanes to impart swirl in the direction of the rotation near the tips to reduce the risk of stall. In other examples, the hardware may extend over the propeller to enclose the propeller and, in other examples, the hardware may extend axially downstream of the propeller. In still other examples, the hardware may include or create a diffuser at its exit to reduce the pressure within the duct thereby increasing the velocity of the air, and thereby increase the air flow through the propeller blades of the unducted engine.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

One way to view a propeller, its flow field, and any associated structures is via a section plane that includes the propeller central axis of rotation. Such a plane shows how features vary in the axial and radial direction, so can be referred to as an axial-radial view. The structures and flow features may also vary normal to that plane, i.e., in the circumferential (or rotation) direction, but the most significant variations to be discussed are typically in the axial and radial directions. The axial-radial view is used the figures herein. Forward (or upstream) and aft (or downstream) refer to relative positions as measured along (parallel to) the central axis of rotation of the propeller, respectively, in which the flow of the working fluid, such as air, flows from forward to aft during normal operation (some of the fluid might flow aft to forward during atypical operation, such as reverse thrust). The fluid described in many of the examples herein is air, but it will be appreciated that the fluid could be water or other fluids.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

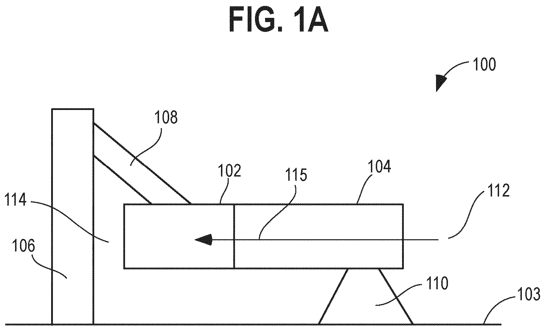

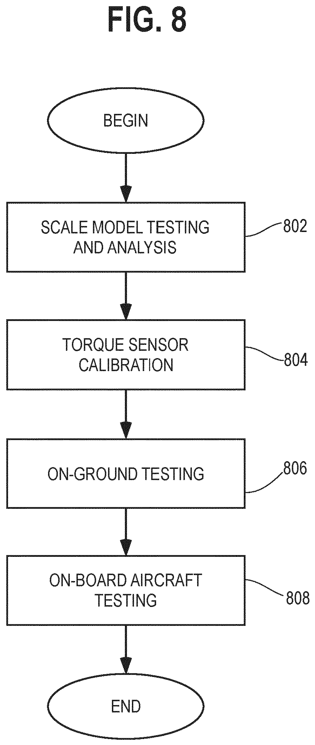

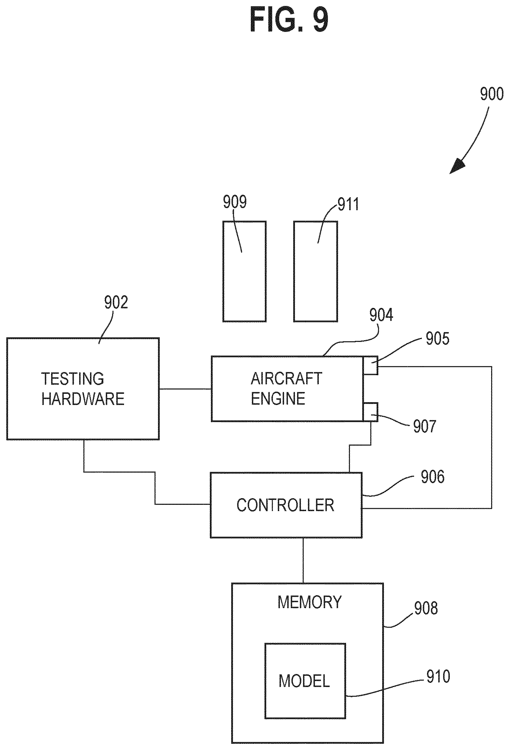

The approaches described with these figures relate to on-ground testing, for example, as described with respect to step 806 of FIG. 8 and the approach described with respect to FIG. 9. The approaches described with respect to FIGs. 1A-5R are applicable to the on-ground testing of any unducted thrust producing apparatus and can be used as part of a testing process described with respect to FIGs. 8-12. However, it will be appreciated that the testing hardware or flow conditioning structures provided herein are not limited to use with this particular testing process and can be used with other testing processes as well. For example, the testing approach may be useful to test marine propellers in a static test environment.

A propeller, comprised of airfoil shaped blades attached to a hub or spinner that rotates about a central axis of rotation, can be used to provide thrust to a vehicle, such as an aircraft, boat, or submarine. The span of a blade is the distance from its attachment point, or root, to the free end, or tip. Spanwise location is the fractional position, from root to tip, along the blade span. For example, 50% span, is half the distance from the root to the tip. The blade has a leading, or forward-most, edge where the incoming air first reaches the blade. The airfoil sections of the propeller may be viewed at individual spanwise locations along the spanwise direction. In an axial-radial view used herein, the propeller tip has an axial and radial location of the intersection of the blade leading edge with the blade tip. The size of the propeller, or propeller tip radius, may be characterized by the distance of the intersection of the blade leading edge with the blade tip from the central axis of rotation. Thus, the propeller tip radius is the radial location of the propeller tip. The blade chord angle at any spanwise location is the angle formed between a line connecting the leading and trailing edge points and the propeller central axis of rotation. Spanwise location, or simply span, is used to indicate location from root to tip of any blade, including a stationary vane comprising the test enabling hardware, structures, or devices described herein.

As mentioned, unducted thrust producing apparatuses include individual propellers or propeller assemblies (that include blades) or individual fans or fan assemblies (that include blades). Unducted thrust producing apparatuses also include entire unducted engines (including the propellers or fan assemblies) no matter the type of engine (e.g., gas turbine or electric).

When the unducted thrust producing apparatus is a propeller or propeller assembly, the propeller or propeller assembly forms a rotating component and includes an array of blades that rotate around a central axis. In some examples, the unducted thrust producing apparatus also includes a non-rotating stationary component, which includes an array of vanes also disposed around the central axis. In some aspects, these vanes may be arranged such that they are not all equidistant from the propeller assembly and may be arranged that they are not all equidistant from the central axis. In other aspects, the vanes are mounted to a stationary frame and do not rotate relative to the central axis.

The propeller produces thrust by accelerating the surrounding fluid, such as air, from a lower axial velocity relative to the propeller upstream (or forward) of the propeller to a higher axial velocity relative to the propeller downstream (or aft) of the propeller. Propellers may be driven by an engine or other power source such as an electric motor. Propellers designed for high subsonic flight, such as greater than Mach 0.7, require high power while being compact to avoid excess aircraft weight and minimize installation penalties (e.g., drag due the propeller stream flowing over a portion of the aircraft). Thus, such propellers for high subsonic flight absorb high power per unit swept annular area, or disk loading, such as greater than 40 hp/ft^2 above Mach 0.7 cruise and greater than 100 hp/ft^2 at Mach 0.15 to 0.3 takeoff. More generally, and as may be of similar utility for marine applications, the power loading can expressed as a non-dimensional power coefficient as

$$C_P = \frac{P}{\rho A (nD)^3}$$, where, $P$ is power absorbed by the propeller, $\rho$ is density of the working fluid far enough from the propeller to be uninfluenced by it, $A$ is annular frontal cross-sectional area of the propeller, $n$ is the rotational speed of the propeller in revolutions per second, and $D$ is the propeller diameter. Propellers with high loading may be designed for $C_P > 2$ at a high vehicle speed condition, such as cruise for a high subsonic aircraft. Propellers may have variable pitch blades, where pitch refers to the angle of the blade chord at a representative spanwise location with respect to the tangential (or rotational) direction. As such, pitch angle is the complement, e.g., 90 degrees minus, the blade chord angle mentioned previously. Variable pitch enables propellers to operate more efficiently over a range of flight conditions and rotational speeds. As a result, the angle-of-attack of the air relative to a propeller blade airfoil section at a given spanwise location is determined by the speed and direction of the incoming flow, the tangential speed of the propeller blade at that location, and the blade chord angle of the airfoil section of the propeller blade at that radius.

In another example of an unducted thrust producing apparatus, an entire engine is provided including the propeller or propeller assembly. The engine includes a drive mechanism, which provides torque and power to the rotating element (the propeller or propeller assembly) through a transmission. In aspects, the drive mechanism may comprise a gas turbine engine, an electric motor, an internal combustion engine, or any other suitable source of torque and power and may be located in proximity to the rotating element or may be remotely located with a suitably configured transmission. Transmission transfers power and torque from the drive mechanism to the rotating element and may include one or more shafts, gearboxes, or other mechanical or fluid drive systems.

Referring now to FIG. 1A, one example of a system 100 for testing an unducted aircraft engine on the ground is described. The system 100 includes testing hardware 104 (also referred to as a "flow conditioning structure" herein). An unducted aircraft engine 102 (sometimes referred to as an "unducted thrust producing apparatus" herein) is associated the system 100 for testing. More specifically, the unducted aircraft engine 102 is supported, held, and/or secured by a supporting structure 106 that includes one or more arms 108. The testing hardware 104 rests on a stand or support 110. In aspects, the supporting structure 106 and the one or more arms 108 allow the unducted aircraft engine 102 to be disposed as the unducted aircraft engine 102 would hang from an aircraft (e.g., from the wing of an aircraft) during flight. The arrangement of FIG. 1A is positioned on the ground 103.

As shown in FIG. 1A, the testing hardware 104 is generally positioned in an upstream direction 112 upstream of the unducted aircraft engine 102 and the propeller blades of the unducted aircraft engine 102. Relative to unducted aircraft engine 102, a downstream location 114 is shown as being opposite the upstream location 112. It will be appreciated that although at least some of the testing hardware 104 is upstream of the propeller blades of the unducted aircraft engine 102, some of the structures of the testing hardware 104 can extend toward the downstream location 114. During testing, air flows generally from the upstream location 112 to the downstream location 114 in the direction of the arrow labeled 115.

The unducted aircraft engine 102 is an unducted engine in that its fan and/or propeller is not surrounded by a duct as in a turbofan engine. As discussed previously, the unducted aircraft engine 102 is one example of an unducted thrust producing apparatus and any unducted thrust producing apparatus can be used. In aspects, the unducted aircraft engine 102 has one or more fan sections not located within or covered by a fan duct. Removal of the fan duct (as compared to turbofan engines) permits the use of larger fan or propeller blades able to act upon a larger volume of air than a fan located within a fan duct. As has been discussed elsewhere herein, the unducted aircraft engine 102 can have an improved propulsive efficiency over a ducted turbofan engine and the unducted fan may also be called a propeller.

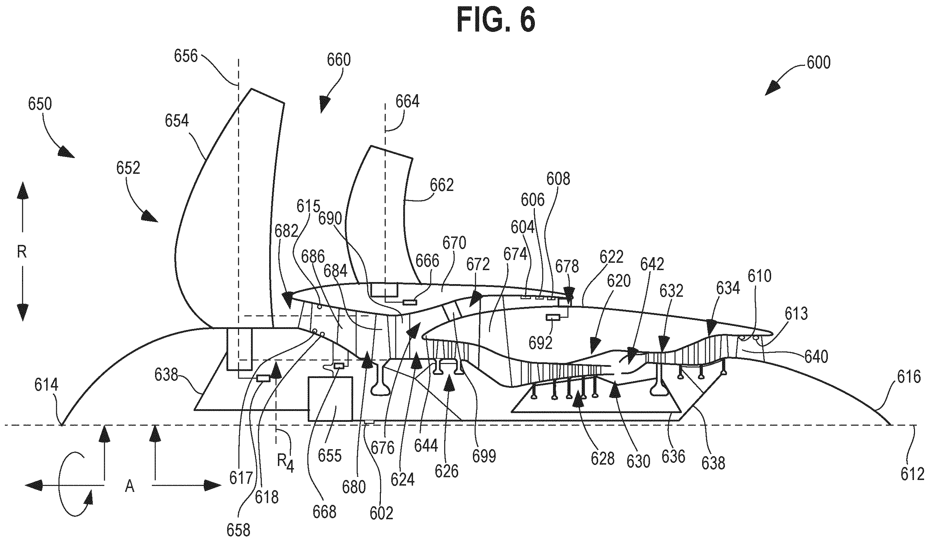

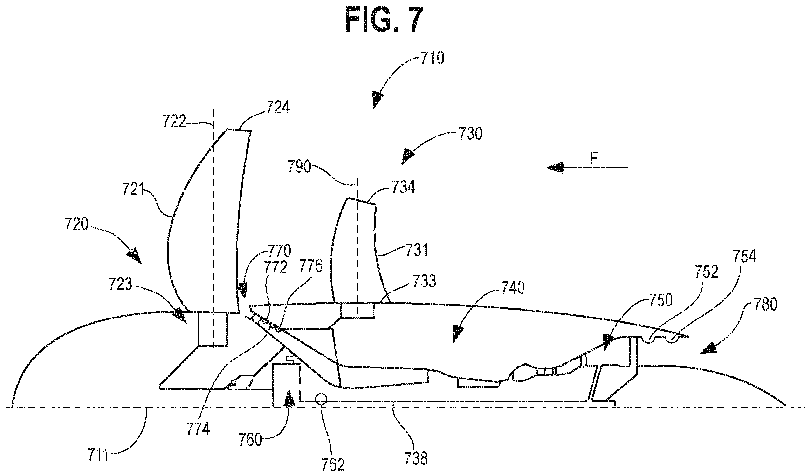

In some examples, the unducted aircraft engine 102 includes a forward rotating blade assembly and an aft stationary blade assembly. However, other configurations are possible. For example, instead of being a forward rotating blade assembly and an aft stationary blade assembly, the two blade assemblies could be counter-rotating with respect to one another. As another example, the forward blade assembly could be stationary and the aft blade assembly could be rotating. As another example, the unducted propulsion system may consist of only a rotating blade assembly, e.g., a propeller. The approaches provided herein apply to all of these configurations and the blades referenced in this disclosure may be fan blades or propeller blades. Examples of unducted engines are described elsewhere herein with respect to FIG. 6 and FIG. 7.

The testing hardware 104 is utilized with the unducted aircraft engine 102. The testing hardware 104 is applied to, coupled to, and/or fits around (without touching) the unducted aircraft engine 102. In aspects, the testing hardware 104 is a duct positioned in the upstream direction 112 of the fan or propeller assembly of the unducted aircraft engine 102 that is being tested statically. The testing hardware 104 is effective to accelerate the flow and constrain the flow direction near the propeller tip to approximate a forward speed condition of the vehicle to which the unducted aircraft engine 102 would be attached. The approaches provided herein can be used to increase the velocity (speed and direction) to represent velocities encountered when an aircraft is moving at aircraft forward speeds of 0.15 to 0.35 Mach (and in some cases, higher values). Such approaches also apply generally to an unducted thrust producing apparatus in a working fluid, such as air or water, to achieve power coefficient of $C_P > 1.0$. Various duct shapes and configurations enhance the aerodynamic loading capability in the tip region of the fan blade, resulting in higher power and flow conditions that may resemble specific mission points, for example, enabling the propeller for an unducted aircraft engine to absorb more than 75% of takeoff power.

In aspects, the testing hardware 104 includes a duct that is placed in the position upstream of the unducted aircraft engine 102 in the upstream direction 112. In examples, the duct may have a bell mouth-shaped inlet followed by a diameter approximately that of the propeller that terminates a short distance, e.g., within 10% of the propeller tip radius, upstream (in the upstream direction 112) of the unducted fan or propeller blade tips of the unducted aircraft engine 102. In other aspects, the duct may be attached to or utilized with a fan bank to reduce flow area of the air supplied by the fan bank and, thus, accelerate the supplied air.

In other examples, the duct includes a nacelle-type inlet and may be placed between the fan bank and the propeller. It may also be configured to effectively condition the flow over its interior and exterior surfaces both with a fan bank or without a fan bank. In other examples, the duct is extended axially over the tips of the propeller to further limit the radial flow and may include a downstream diffuser. In other examples, the duct could have an attached duct or ring with a larger diameter that further guides the flow from radii greater than the propeller tip radius into an axial direction toward the propeller tip. In still other aspects, the duct may include pre-swirl vanes cantilevered from the duct walls a short distance (e.g., within 20% of the propeller tip radius) into the stream tube to put a pre-swirl into the flow entering the tip region of the fan or propeller blades.

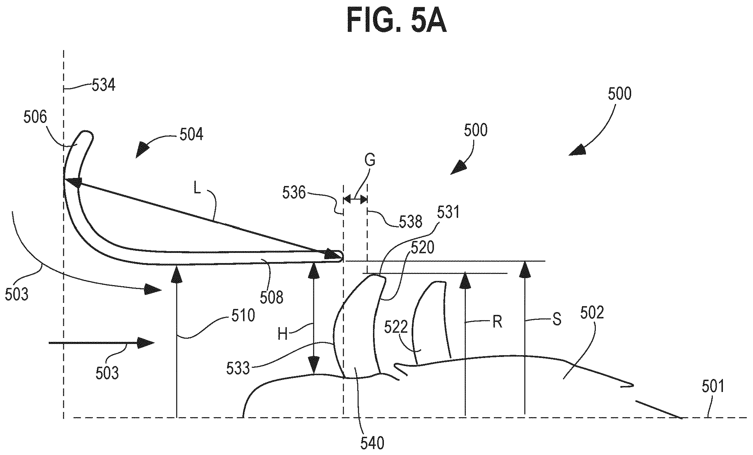

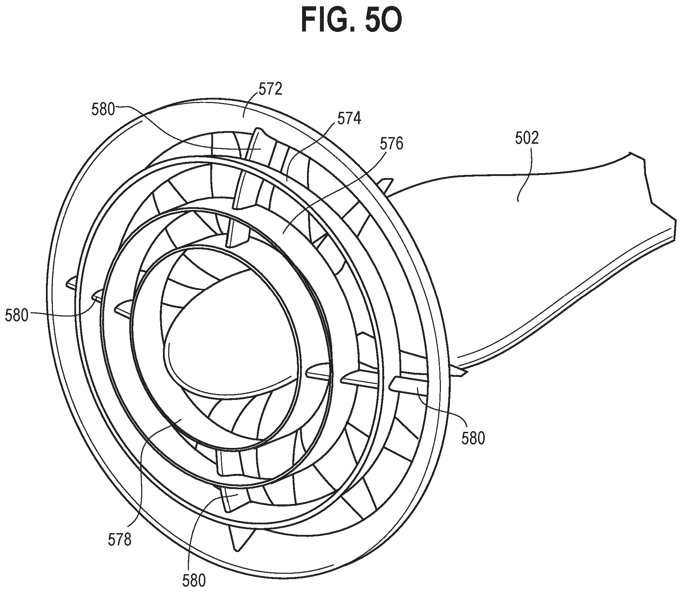

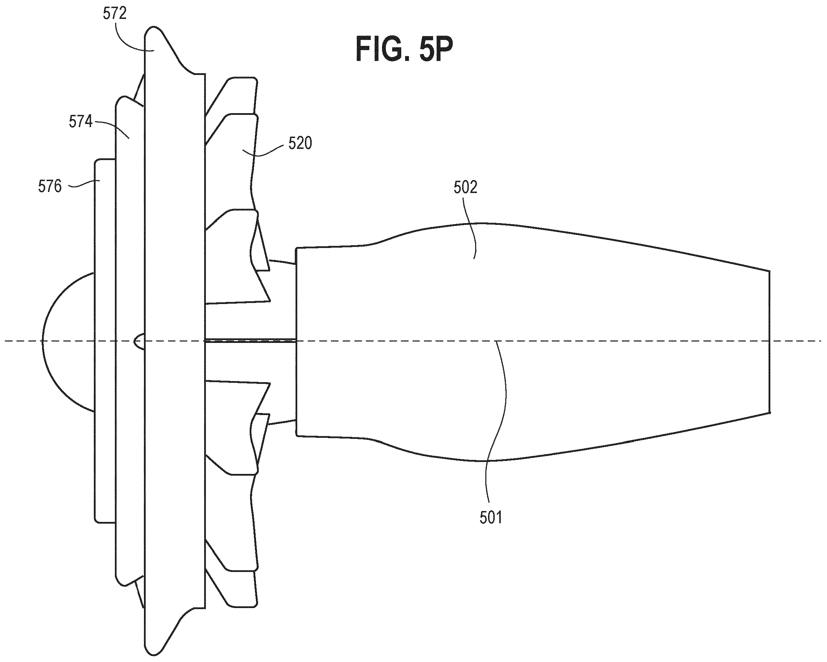

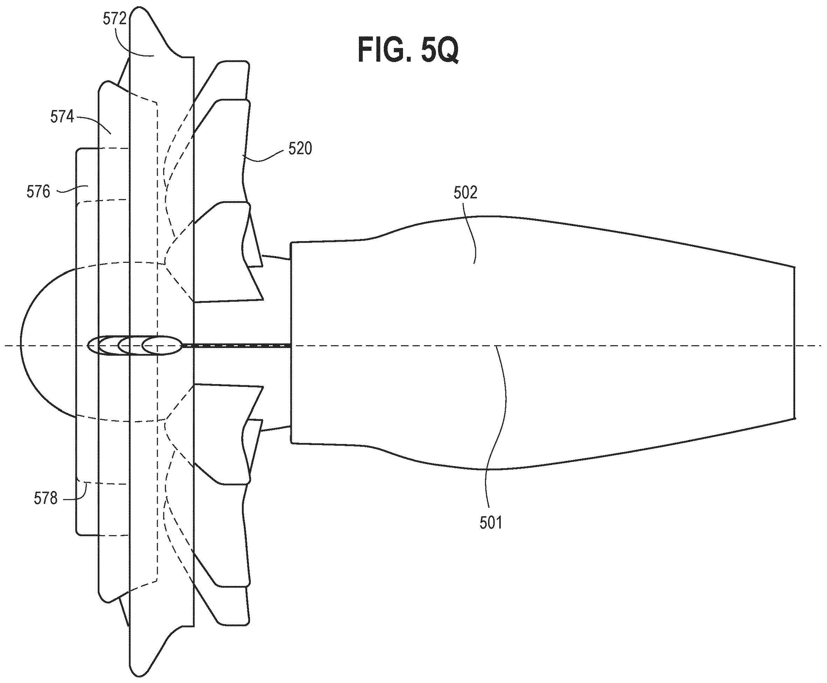

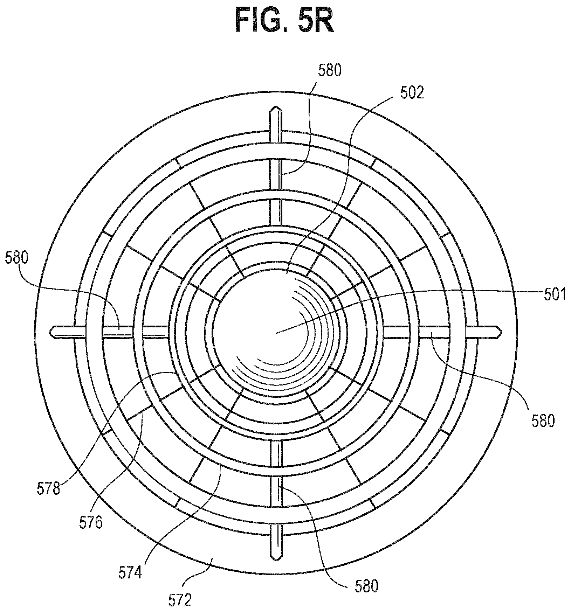

These and other configurations of the duct are described in greater elsewhere herein (e.g., in FIGs. 5A-5R). The exact configuration utilized can be selected by a user based upon the needs of the user, the needs of the test, costs to produce the testing hardware 104, or other factors.

In some examples, the testing hardware 104 is used with a fan bank (e.g., an assembly of one or more fans). The fan bank produces an increased air flow of air flowing through the testing hardware 104 and the unducted aircraft engine 102. A fan bank may be particularly useful to be used with testing hardware 104 that includes nacelle-type inlets. The fan bank may be attached directly to the testing hardware 104 or placed adjacent (not attached).

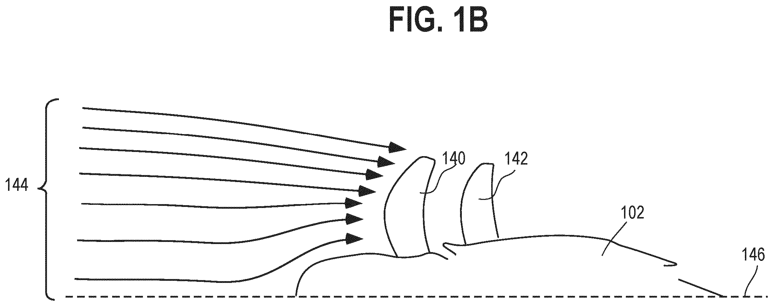

Referring now to FIG. 1B, one example shows the unducted aircraft engine 102 during flight operations. The unducted aircraft engine 102 includes rotating propeller blades 140 and fixed vanes 142. Airflow 144 flows and impacts the engine as shown, generally in a direction parallel to a central axis 146 of the unducted aircraft engine 102. FIG. 1B illustrates a streamline pattern of air entering a propeller (configured as part of an unducted fan gas turbine engine). The tube of air entering the propeller may be called a "streamtube", converges in radius from a cross-sectional area (capture area) that is larger than the frontal area of the propeller far upstream of the propeller to a smaller cross-sectional area as the flow accelerates into the propeller. Because the entering air has high axial velocity and low radial velocity, the angle-of-attack of the flow relative to the chord angle of a blade of the propeller is within an efficient operational characteristic of the blade over most of the spanwise extent of the blade.

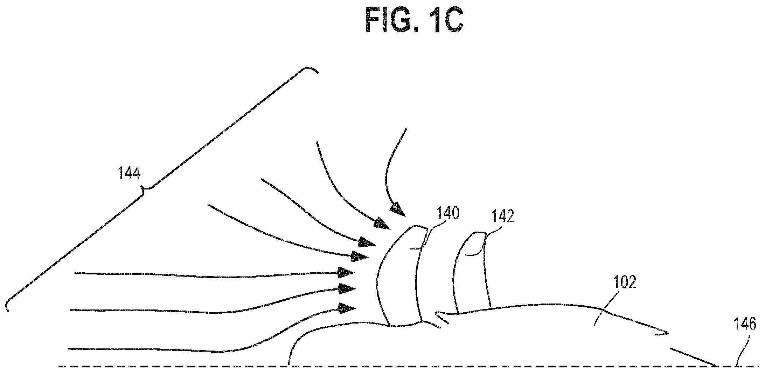

Propellers behave differently in a static or ground test than they do in forward motion. Without the duct that is present around other types of propulsive fans, e.g., used in turbofan engines, propellers operating statically draw air radially inward as well as from behind. This creates a streamline pattern of air entering the propeller that is different from a forward speed condition, even for a relatively low speed condition such as takeoff. Referring now to FIG. 1C, one example shows the unducted aircraft engine 102 during static or ground tests without the testing hardware 104. In this case, unlike during flight operations, the airflow 144 is not always parallel or generally parallel to the central axis 146 but instead, especially about the tips of the propeller blades 140, is drawn in at an angle towards the tips where the angle can approach being perpendicular to the tips of the propeller blades 140 or even from behind the propeller. The resulting air flow entering the propeller has low axial velocity and a high radially inward velocity component. For a propeller with a blade chord angle set for the takeoff condition, the angle-of-attack of the flow relative to the blade tip is very high. A propeller blade is like a rotating wing and its aerodynamic loading increases with the angle-of-attack of the flow relative to the leading edge of the wing, with very high angle-of-attack leading to "stall", i.e., separation of the flow from the airfoil surface. Thus, the tip of the propeller blade has high aerodynamic loading and is susceptible to stall. Such a stalled condition limits the power absorption capability of the propeller, both by creating a re-circulating region near the blade tip that the blades are unable to energize as well as flow instability that can lead to aeromechanical vibrations and instabilities, such as flutter, which can cause the propeller blades to break apart due to the high oscillating loads.

The propeller static power limitation becomes increasingly severe with increasing power coefficient, as designed for high Mach flight. Not only does the high power coefficient contribute to high aerodynamic loading on the blades, but the blades of such propellers also have airfoil cross-sections that are relatively thin compared to those of propellers that are designed for lower speed flight. Thin blades may be more susceptible to failure due to vibrations and flapping or flutter. Testing propellers on the ground at forward speed conditions may be accomplished in a wind tunnel. However, a wind tunnel test program may not be practical for large propellers, such as used for commercial aircraft. To make testing practical, one can study the behavior and performance of a small-scale model of the propeller in a wind tunnel. However, wind tunnel tests of small scale models, with their own input power requirements, do not necessarily capture all of the real physical phenomena of the original. Furthermore, for ground testing the engine that drives the propeller, it would be beneficial to enable the propeller to absorb power input by the engine for a high power condition, such as takeoff. This could have additional benefits of enabling the study of the propeller at aerodynamic loadings like those of some flight conditions, evaluation of the instability of the propeller aeromechanics at such conditions, certification testing of water, bird, or ice ingestion, or power and thrust qualification to determine if an engine meets required specifications.

To support conditioning the flow entering the propeller tip, the point on the outermost structure that is nearest to the propeller tip is at a distance from the propeller central axis that is close to the propeller tip radius. For example, the distance between such a point and the central axis of rotation is within 120% of the propeller tip radius. More preferentially, the distance between such a point and the central axis of rotation is within 110% of the propeller tip radius. As will be illustrated herein, the distance between the surface nearest to the propeller tip and the central axis is close to the propeller tip radius.

In an axial-radial view, the surfaces of the flow conditioning structures may be subdivided into outer and inner portions, where the inner portion guides flow that is between the structure and the central axis of rotation of the propeller and the outer portion guides the flow that is in between that surface and the inner portion of the next further structure from the central axis (if such a structure exists). Thus, the surfaces from a passage or passages that bound the flow entering the propeller. Each surface of the flow conditioning structure has a forward-most (or most upstream) point and a surface point nearest to the propeller tip. For two surfaces that form a passage, one surface is nearer to the propeller tip than the other. On the surface that is nearer to the propeller tip, the passage length is defined as the straight-line distance from the forward-most point to the point nearest to the propeller tip. The passage height may be defined by first considering the surface of the passage that is further from the propeller tip, with the passage height defined as the shortest distance from this surface to the surface that is closer to the propeller tip. Preferentially, passage length relative to passage height is sufficient to effectively direct and accelerate the flow entering the propeller. Thus, the surfaces form passages that have an aspect ratio, defined as length divided by height, greater than 1. More preferentially, as illustrated in the examples herein, the aspect ratio is greater than 1.5.

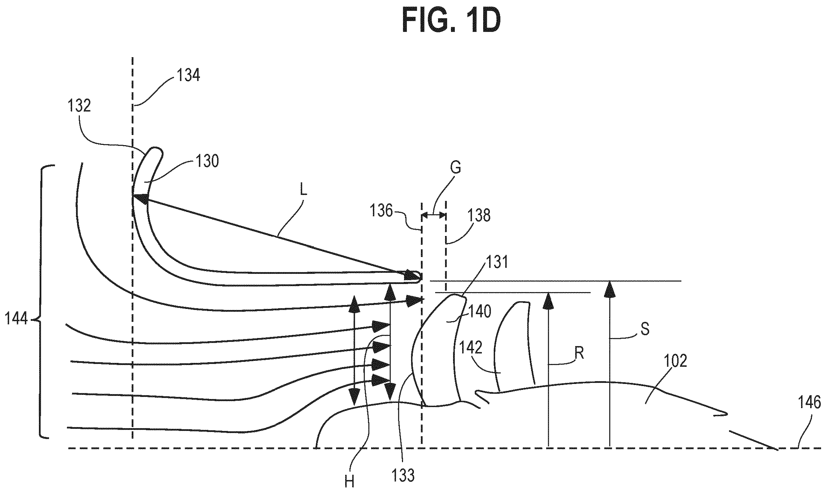

Referring now to FIG. 1D, one example shows the unducted aircraft engine 102 during static or ground test using the testing hardware 104. In this case, the testing hardware 104 includes a duct structure 130 with a rounded lip 132 configured as a bell mouth inlet. As shown in FIG. 1D, the with the propeller operating at a similar angular speed and blade pitch angle setting as in FIG. 1B, airflow 144 has direction and speed that are representative of the flight-like conditions shown in FIG. 1B. The rounded inlet enables air to make the transition from a high radial velocity component to a primarily axial velocity component before entering the tip of the propeller. The duct downstream of the bell mouth may have an inner surface that is cylindrical, as depicted in the Figure, or non-cylindrical. Each blade 140 has a tip 131 at its free end and a leading edge 133 where the working fluid enters the propeller during forward thrust operation. In the axial-radial view shown, the propeller tip corresponds to the axial and radial location of the intersection of leading edge 133 with tip 131. The propeller tip radius, R, corresponds to the distance of the intersection of leading edge 133 with tip 131 from the central axis of rotation 146. The distance, S, corresponds to the distance between the central axis 146 and the point on the duct structure 130 surface that is closest to the propeller tip. To effectively condition the flow near the tip of the propeller, S, is preferably within 120% of the propeller tip radius, R, or $S/R < 1.2$. In other aspects, $S/R < 1.1$.

The inner surface of the duct structure 130 forms a passage with the spinner and hub surface of the propeller, thus bounding the flow entering the propeller. Axial location 134 corresponds to the forward-most location on the duct structure 130. Axial location 136 corresponds to the closest point of the duct structure 130 to the propeller tip. Passage length, L, is the straight line distance between the points on the structure corresponding to axial location 134 and axial location 136. Passage height, H, is the distance between surfaces of unducted aircraft engine 102 and the inner surface of the duct structure 130.

The relationship between passage length, L, and passage height, H, defines a passage aspect ratio, L/H. In some aspects, $L/H > 1$. In other aspects, as indicated in the examples herein, $L/H > 1.5$. In some aspects, $L/H < 5$ to avoid unnecessary friction losses in the boundary layers that form on the passage surfaces.

Axial location 138 corresponds to the propeller tip. The axial gap, G, corresponds to the axial distance between the closest point of the duct structure 130 to the propeller tip, i.e., the distance between axial location 136 and axial location 138. To effectively direct the flow to the entrance of the tip, G should be as small as possible while avoiding contact with the propeller. Preferably, G is within 20% of R, i.e., $G/R < 0.2$. Having the structure even closer to the propeller tip would be more effective, for example $G/R < 0.12$.

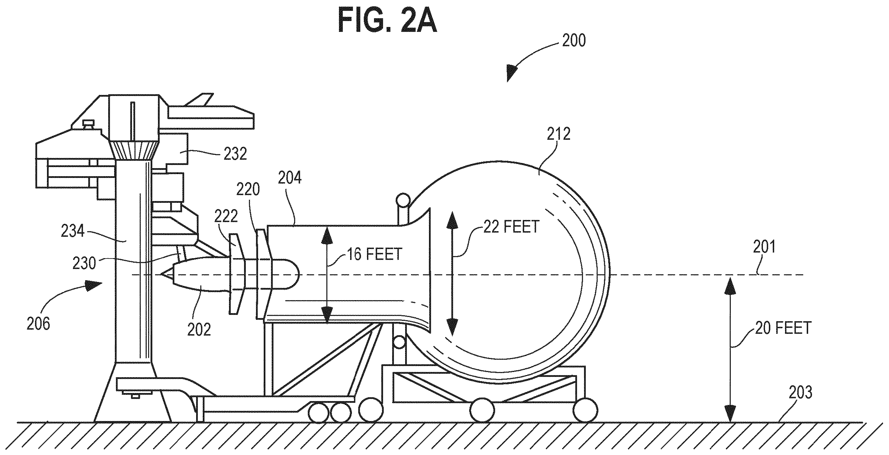

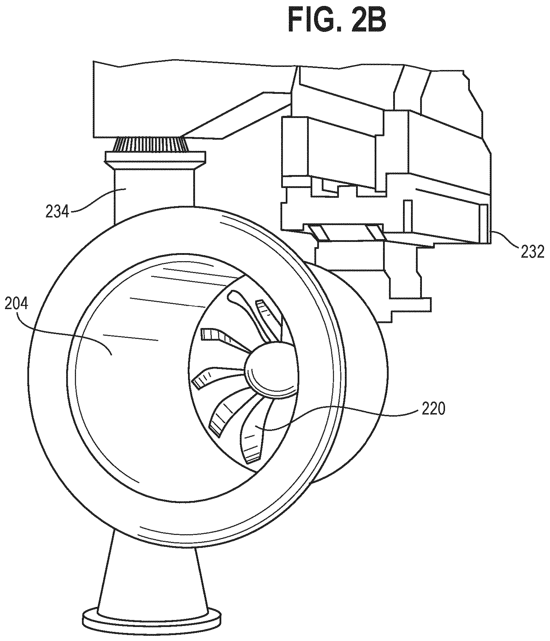

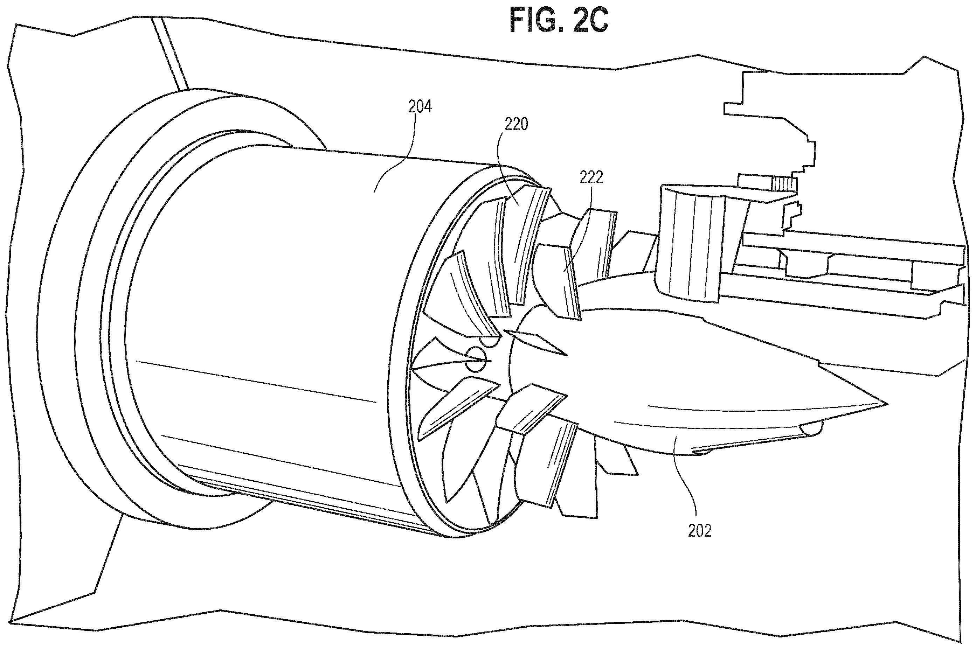

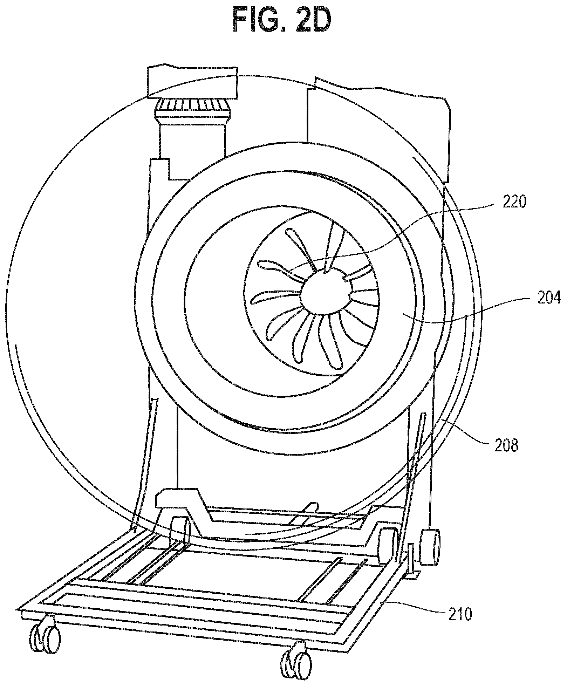

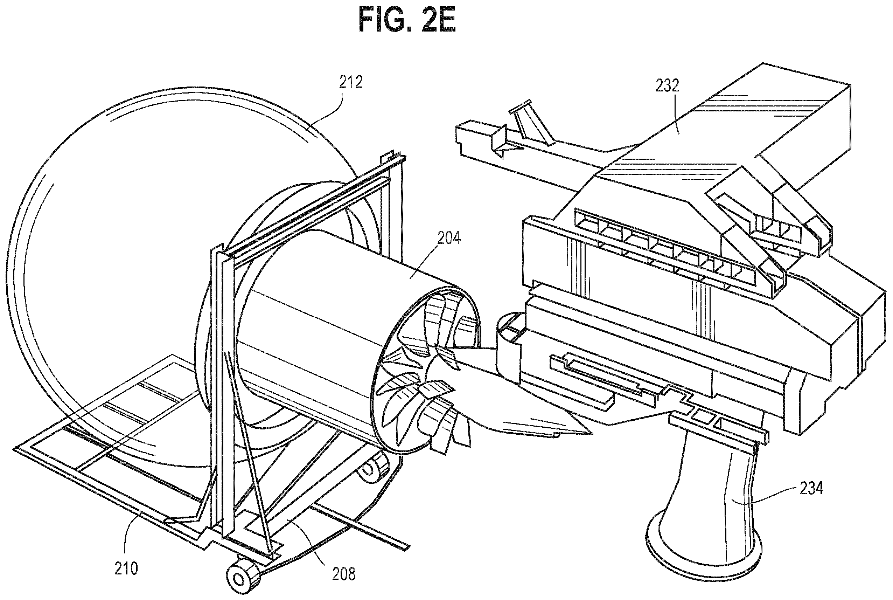

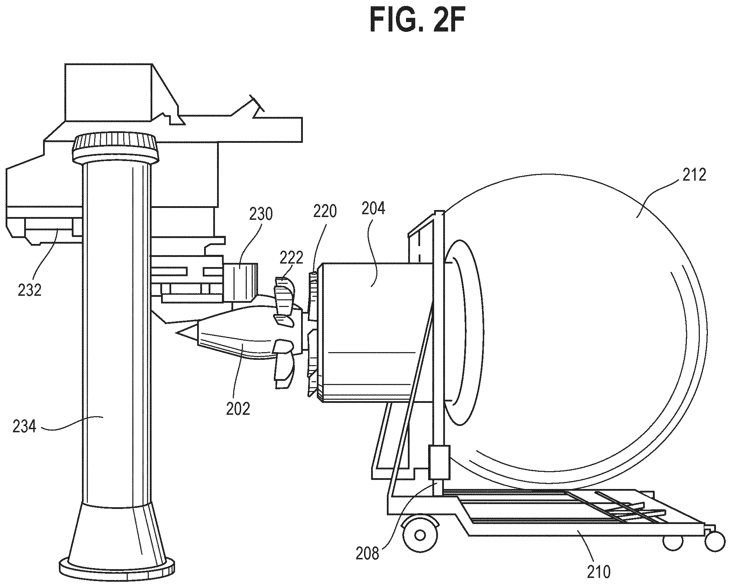

Referring now to FIG. 2A, 2B, 2C, 2D, 2E, and 2F, one example of a system 200 for testing an unducted aircraft engine is described. The system 200 includes an unducted aircraft engine 202, a duct 204, first supporting structure 206, a second supporting structure 208, and a turbulence control structure (TCS) dome 212. The testing is performed on the ground.

The unducted aircraft engine 202 includes a first fan blade assembly 220 and a second blade assembly 222. The first fan blade assembly 220 is a forward rotating blade assembly and the second blade assembly 222 is a stationary blade assembly. However, other configurations are possible. For example, instead of being a forward rotating blade assembly and an aft stationary blade assembly as shown, the fan blade assemblies 220 and 222 could be counter-rotating with respect to one another. As another example, the forward blade assembly (e.g., the first blade assembly 220) could be stationary and the aft blade assembly (e.g., the second blade assembly 222) could be rotating. As another example, the unducted propulsion system may consist of only a single rotating blade assembly, e.g., a propeller.

The duct 204 is placed in the position upstream of the unducted aircraft engine 202. In examples, the duct 204 is constructed of a metal or, in other examples, a composite material such as glass fiber reinforced epoxy rather than a metal. In aspects, the duct 204 may have a bell mouth-shaped inlet followed by a diameter approximately that of the fan blades or propeller blades that terminate a short distance (e.g., less than 0.2 of propeller tip radius) axially forward of the blade tips. In other examples, the duct 204 may be attached to or be associated with fan bank to reduce flow area and, thus, accelerate the supplied air. In other examples, the duct 204 includes a nacelle-type inlet and is placed between the fan bank and the fan blades or propeller. In yet other examples, the duct 204 is extended axially over the tips of the fan blades or propeller to further limit the radial flow and may include a downstream diffuser. In still other aspects, the duct may include pre-swirl vanes cantilevered from the duct walls a short distance (e.g., less than 0.2 of propeller tip radius) into the duct to put a pre-swirl into the flow entering the tip region of the fan or propeller blades.

The first supporting structure 206 supports the unducted aircraft engine 202 including an arm structure 230 coupled to a support structure 232. The support structure 232 may be coupled to a vertical pillar 234. In examples, the support structure 232 is movable or adjustable along the vertical pillar 234.

The second supporting structure 208 can be a moveable trailer (or part of a moveable trailer) that supports the duct 204 and the TCS dome 212 and has a flat (trailer bed) portion 210. The second supporting structure 208 can include beams, braces, or other parts constructed of an appropriate material having an appropriate strength to hold the duct 204. In this example, the trailer has wheels and can move the duct 204 and the TCS dome 212 into position with the unducted aircraft engine 202.

The TCS dome 212 is a dome constructed so as to control environmental conditions within the TCS dome 212. In one example, the TCS dome 212 may be constructed of a porous material. One purpose of the TCS dome 212 is that it reduces and/or controls the turbulence of the air injected through the unducted aircraft engine 202.

Various examples of duct structures can be utilized. In the example of FIG. 2A, 2B, 2D, and 2F, the duct is shown as having a bell mouth inlet. In the examples of FIG. 2C and 2E, the duct 204 is shown with a nacelle-type inlet.

In examples, the duct 204 is 16 feet in diameter, the bell mouth inlet is 22 feet in diameter, and the unducted aircraft engine 202 and the duct 204 have a central axis 201 that is 20 feet off the ground 203.

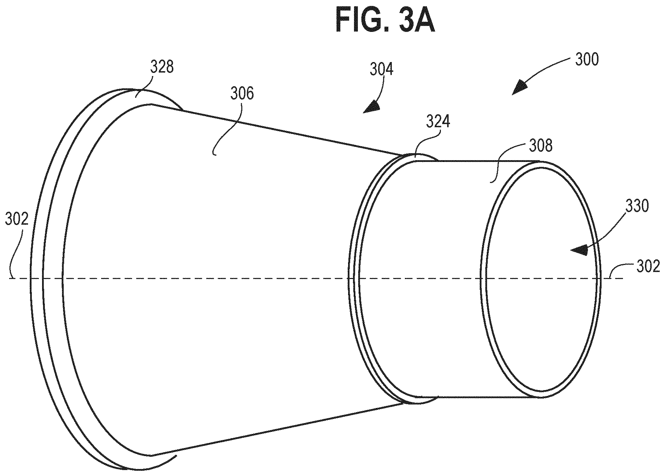

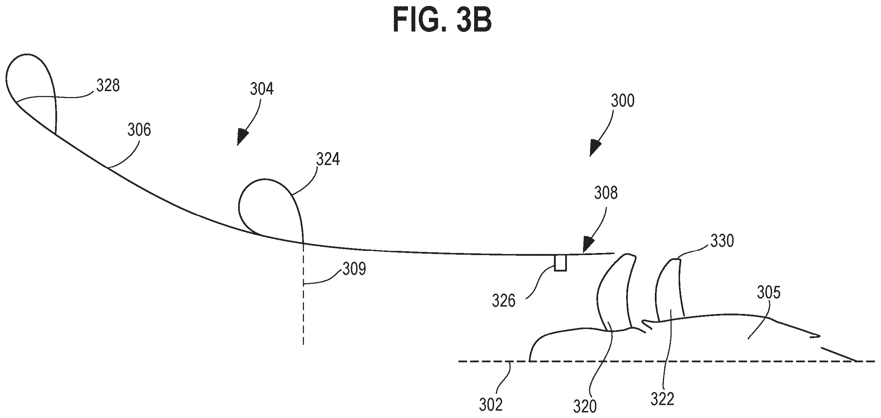

Referring now to FIG. 3A and FIG. 3B, one example of a system 300 using modular testing hardware to ground test an unducted aircraft engine is described. FIG. 3A shows a perspective view of the modular testing hardware and FIG. 3B shows cross-sectional views taken along a central axis 302 of a duct 304 with an unducted aircraft engine 305 positioned adjacent to the duct 304 and, for simplicity, shows only the top half of the duct and unducted aircraft engine combination. The duct 304 includes a concentrator cone 306 and cylindrical inlet section 308. The concentrator cone 306 is detachable from the cylindrical inlet section 308 as shown along line 309. Consequently, the duct 304 is modular in construction and includes multiple parts that attach together. The purpose of the concentrator cone 306 is to capture and funnel air into the cylindrical inlet section 308, which directs the now-concentrated air into the unducted aircraft engine 305. Attachment of the different sections can be made by different types of fastening arrangements.

The unducted aircraft engine 305 includes a first fan blade assembly 320 and a second unducted blade assembly 322. The first fan blade assembly 320 is a forward rotating blade assembly and the second unducted blade assembly 322 is a stationary blade assembly. However, other configurations of blade assemblies are possible. For example, instead of being a forward rotating blade assembly and an aft stationary blade assembly as shown, the two blade assemblies could be counter-rotating with respect to one another. As another example, the forward blade assembly could be stationary and the aft blade assembly could both be rotating. As another example, the unducted propulsion system may consist of only a single rotating blade assembly, e.g., a propeller.

The concentrator cone 306 includes a lip roll 328. The purpose of the lip roll 328 is to direct air towards the unducted aircraft engine 305. The cylindrical inlet section 308 includes a standard lip roll 324. When the concentrator cone 306 is unused and detached from the cylindrical inlet section 308, the standard lip roll 324 directs air to the unducted aircraft engine 305.

The cylindrical inlet section 308 includes vanes 326, one of which is shown in FIG. 3B. The purpose of the vanes 326 is to add swirl ahead of the tip of blades of the first fan blade assembly 320 to achieve a more representative tip work distribution.

As can be seen in FIG. 3B, the inlet 330 ends before the blade tip of the blades of the first fan blade assembly 320. Consequently, when the blades of the first fan blade assembly 320 rotate, they will not strike the duct 304. As can be seen in FIGS. 2A and 3B, the test enabling hardware for testing a full size engine can be large and heavy. This could make it challenging to keep the test enabling hardware in the desired position during propeller operation as the forces vary on the test article and testing enabling hardware. For example, the axial separation, indicated by distance G in FIG. 1D may change during the test. As another example, FIG. 1D shows the test enabling hardware as an axisymmetric structure with the same centerline as the propeller central axis of rotation 146. Forces and motion on the test article and test enabling hardware could cause them to be misaligned. However, systems and procedures could be implemented to keep S/R and G/R within desirable ranges. It should be recognized that the test enabling hardware structures will generally not be axisymmetric because of asymmetries required for structural strength, rigidity, mounting, supports, etc. Also, the test enabling hardware structure may deviate from axisymmetry without losing its functionality to accelerate and direct the flow into the propeller. Finally, the hardware will include structures that are not "flow conditioning", e.g., for structural purposes.

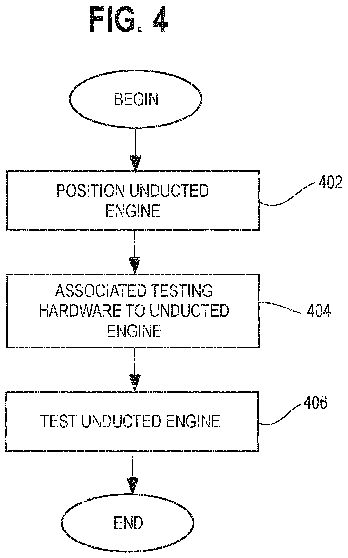

Referring now to FIG. 4, one example of a testing process using the structures provided herein is described.

At step 402, the unducted aircraft engine is positioned, lifted or secured for purposes of testing. For instance, the unducted aircraft engine (e.g., the unducted aircraft engine 102 of FIGs. 1A-1D) is secured to a supporting structure (e.g., the supporting structure 106 and one or more arms 108). This may be accomplished manually, and, in some cases, automatically.

At step 404, the unducted aircraft engine (e.g., the unducted aircraft engine 102) and testing hardware (e.g., the testing hardware 104 of FIG. 1A) are associated together for testing. For example, the testing hardware may be a duct, which may be placed on a movable trailer (e.g., the second supporting structure 208 of FIG. 2A, 2B, 2C, 2D, 2E, and 2F), and the trailer may be positioned so as position the testing hardware generally upstream of the engine. The engine may be at least partially disposed within the testing hardware (e.g., at least partially within a duct when the testing hardware is a duct). When the testing hardware includes a fan bank, the fan bank may be moved into position so as to align with the duct and the engine in a position upstream of the duct. In some aspects, the fan bank is coupled directly to the testing hardware. The testing hardware may be moved manually, and, in some cases automatically into position.

At step 406, the testing of the unducted aircraft engine is conducted. The unducted aircraft engine may include various sensors. The sensors may be coupled with a controller or other device that senses and/or obtains reading from the sensors. The unducted aircraft engine may be activated (turned on) and readings from the sensors obtained. The sensed readings can be used for various purposes such as to determine whether the unducted aircraft engine is operating properly, to adjust models of the engine, or for other purposes.

Various actions can be undertaken as a result of the testing. For example, once the ground testing process is completed, the unducted aircraft engine can be tested in the air under actual flight conditions. In other examples, when the testing identifies problems with the unducted aircraft engine, the unducted aircraft engine can be repaired or modified (e.g., parts or components of the engine replaced).

The testing hardware provided herein allows the engine to be tested at full power and conditions that come closer to fight conditions than previous approaches. The testing hardware provided herein also allows for certification and compliance testing and provides aero conditions suitable for assessing takeoff performance modelling.

Referring now to FIGs. 5A-5R various systems 500 of ducts (used as testing hardware or flow conditioning structures) 504 and unducted aircraft engines 502 are described.

In previous aircraft engine testing procedures used with unducted aircraft engines, fan blades or propellers typically stalled during static conditions. The proper functioning of the blade or propeller depends upon creating a proper airflow. In unducted aircraft engines, air moves through the blade in a direction generally along a central axis extending along the length of the unducted aircraft engine. However, the blade or propeller (when rotating) wants to draw air from the tip (from a direction angled or perpendicular to the central axis) and this limits the fan's or propeller's ability to absorb power from the core of the engine. With this air being drawn inward from the tip, the unducted aircraft engine will not be able to operate at full power during ground testing. And, without a full power test, the testing may be inadequate.

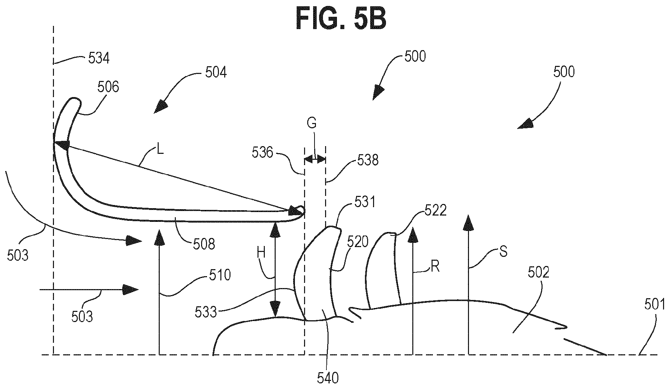

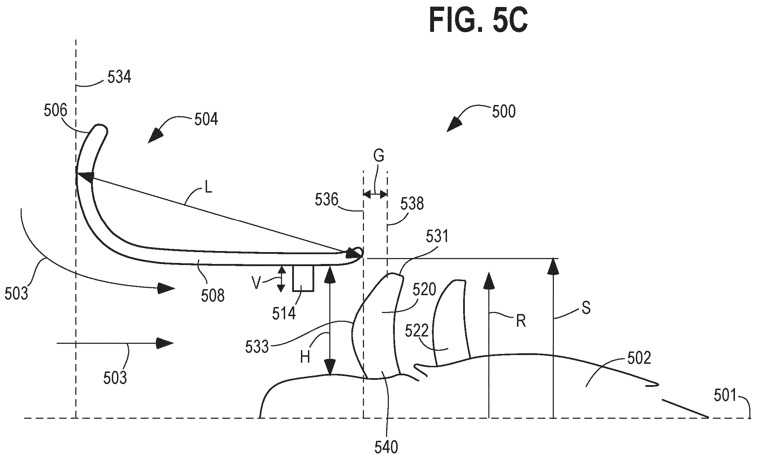

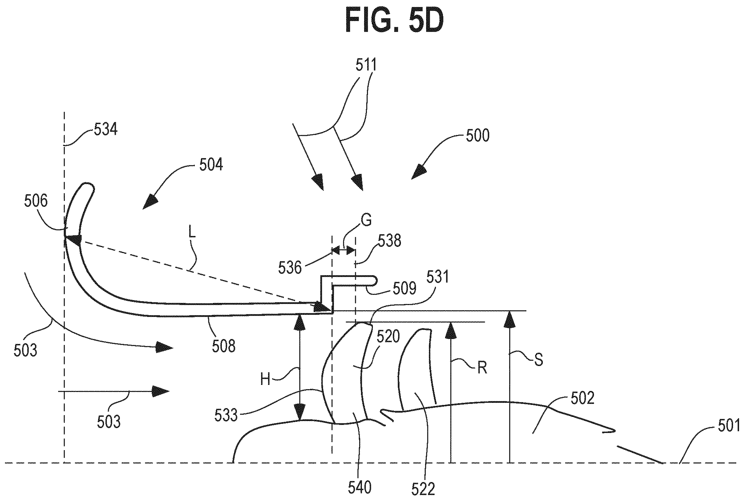

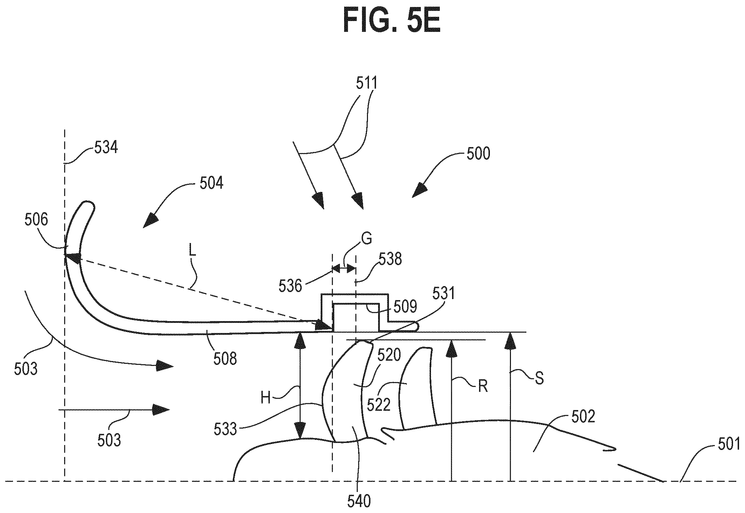

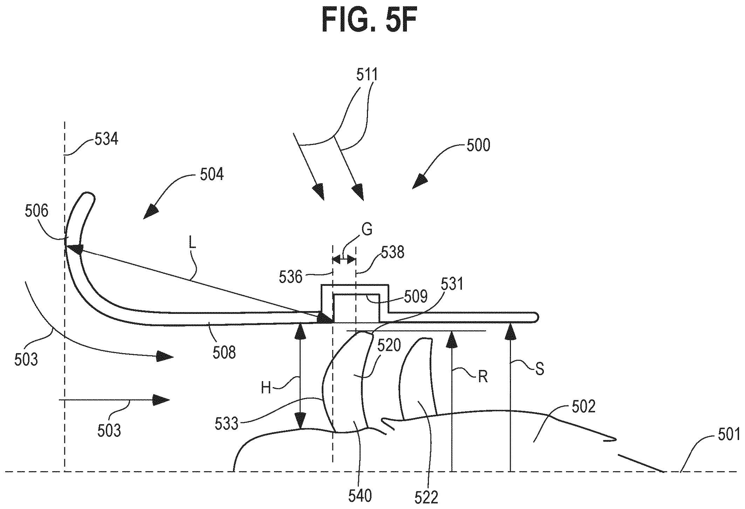

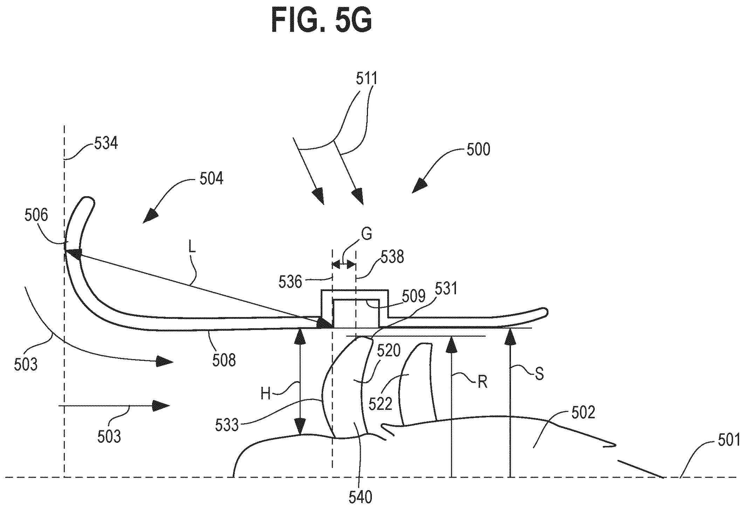

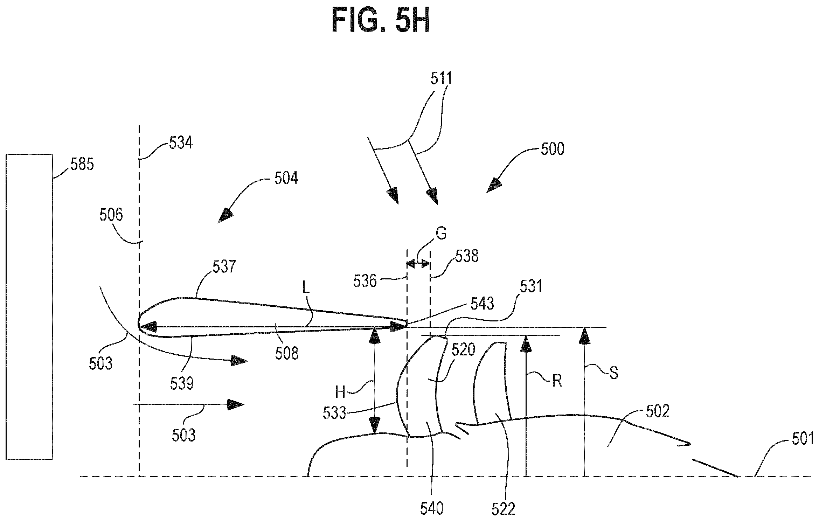

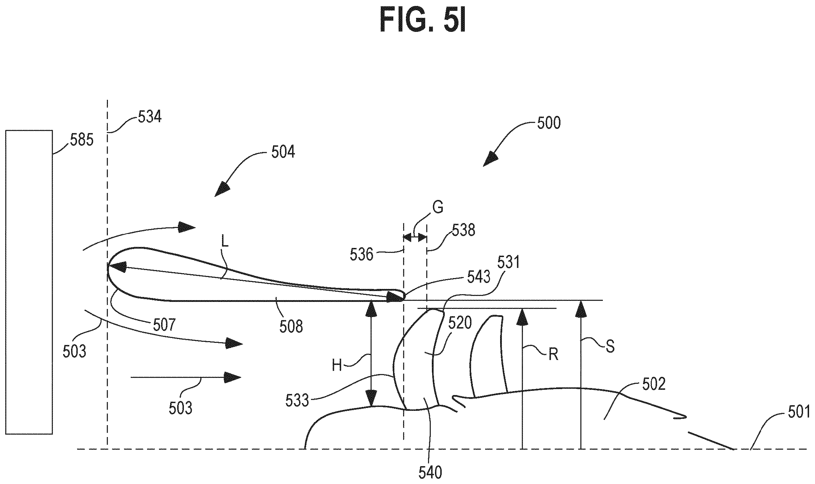

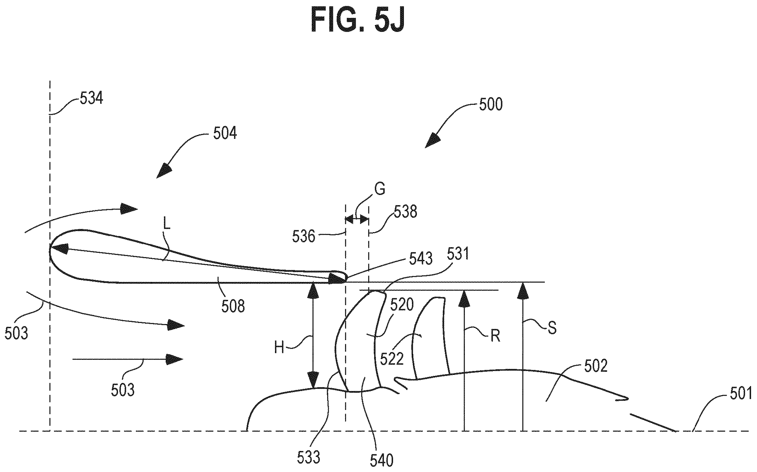

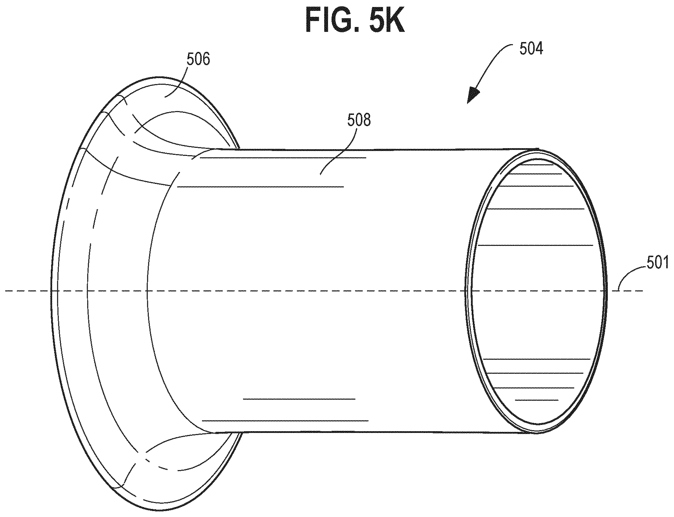

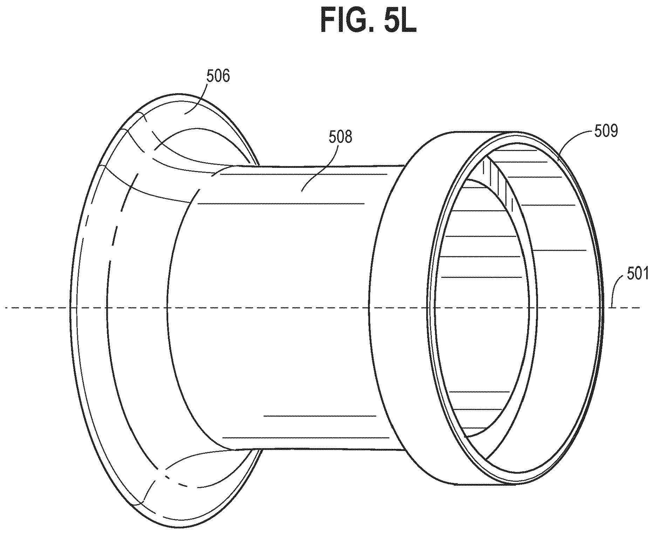

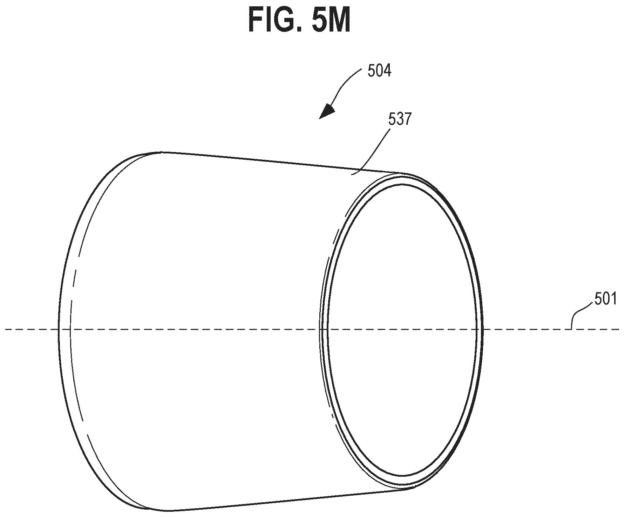

Referring now to FIGs. 5A-5J, these figures show cross-sectional views taken along a central axis 501 of unducted engine and, for simplicity, show only the top half of the duct and unducted engine combination. As mentioned, these different ducts are utilized to test an unducted aircraft engine on the ground with conditions that are near to actual flight conditions as possible. Dimensions, R, S, L, H, and G are as described for FIG. 1D. Preferred non-dimensional ranges are also as described for FIG. 1D. FIG. 5K shows a perspective view of the duct only for the duct 504 of FIG. 5A. As explained below, the perspective view for the duct structures of FIG. 5B and FIG. 5C will be similar. FIG. 5L shows a perspective view of the duct only for the duct 504 of FIG. 5D. As explained below, the perspective view for the duct structures of FIG. 5E, FIG. 5F, and FIG. 5G will be similar. FIG. 5M shows a perspective view of the duct 504 of FIG. 5H. As explained below, the perspective view for the duct structures of FIG. 5I and FIG. 5J will be similar.

Using these structures, the airflow near the tip of the fan blade or propeller is accelerated and the flow direction contained and controlled to approach or be more like a forward speed condition achieved during operations (including takeoff, landing, taxing, and in-flight operations to mention a few examples). More specifically, these structures enhance the aerodynamic loading capability in the tip region of the fan blade or propeller resulting in higher power and flow conditions that may resemble conditions during these flight operations. Advantageously, the ducts or other control structures control the airflow entering the propeller or fan to approximate the flow speed corresponding to aircraft forward speeds of Mach 0.15 to 0.35 where Mach 1.0 is the speed of sound.

In some configurations, these ducts can be used with a fan bank that further increases the speed, velocity, and/or pressure of the air flow. Advantageously, these structures also increase the power absorption capability of an unducted fan blade or propeller in an aircraft engine.

Each of these figures shows an unducted aircraft engine 502 with a first fan blade assembly 520 and a second blade assembly 522. The first fan blade assembly 520 is a forward rotating blade assembly and the second blade assembly 522 is a stationary blade assembly. However, other configurations are possible. For example, instead of being a forward rotating blade assembly and an aft stationary blade assembly as shown, the two blade assemblies could be counter-rotating with respect to one another. As another example, the forward blade assembly could be stationary and the aft blade assembly could be rotating. As another example, the unducted propulsion system may consist of only a rotating blade assembly, e.g., a propeller.

Each of these figures includes a duct 504. As shown, the unducted aircraft engine 502 is at least partially inserted into the duct 504. Air flows through the duct in the direction indicated by the arrows labeled 503. The ducts 504 are open on both ends and form a cavity into which the unducted aircraft engine 502 is inserted.

In many of these figures, blade 540 has a tip 531 at its free end and a leading edge 533 where the working fluid enters the propeller during forward thrust operation. In the axial-radial view shown, the propeller tip corresponds to the axial and radial location of the intersection of leading edge 533 with tip 531. The propeller tip radius, R, corresponds to the distance of the intersection of leading edge 533 with tip 531 from the central axis of rotation 501. Axial location 534 corresponds to the forward-most location on the duct 504. Axial location 536 corresponds to the closest point of the duct 504 to the propeller tip. Passage length, L, is the straight line distance between the points on the structure corresponding to axial location 534 and axial location 536. Axial location 538 corresponds to the propeller tip. The axial gap, G, corresponds to the axial distance between the closest point of the duct 504 to the propeller, i.e., the distance between axial location 536 and axial location 538.

Referring now specifically to FIG. 5A, the duct 504 includes a bell mouth 506 and a downstream section 508. The unducted aircraft engine 502 is inserted partially into the duct 504. The duct 504 is positioned about the unducted aircraft engine 502 so that the blades 540 of the first fan blade assembly 520, when rotating, cannot touch or impact the duct 504. In this case, the downstream section 508 of the duct 504 downstream of the bell mouth 506 is depicted as cylindrical, but this may not be strictly the case. In examples, the arrangement of FIG. 5A does not require the use of a fan bank. FIG. 5K shows a perspective view.

Referring now to FIG. 5B, the duct 504 includes a bell mouth 506 and a downstream section 508. The unducted aircraft engine 502 is inserted partially into the duct 504. The duct 504 is positioned about the unducted aircraft engine 502 so that blades of the first fan blade assembly 520, when rotating, cannot touch or impact the duct 504. In this case, the radius of the downstream section 508 changes relatively little until a short distance upstream of the point on its surface that is nearest to the propeller tip. By having a surface of the downstream section 508 with a smaller distance from the central axis of the propeller than the example of FIG. 5A followed by an increase in distance over a short axial distance leading up to the point closest to the propeller tip, the example of FIG. 5B may provide better acceleration of the air entering the propeller and better prevention of radially inward flow toward the propeller tip. In examples, the arrangement of FIG. 5B does not require the use of a fan bank. The perspective view will be similar to FIG. 5K except that the radius of the downstream section 508 near the unducted aircraft engine is slightly greater than the radius of the downstream section 508 away from the unducted aircraft engine 502.

Referring now to FIG. 5C, the duct 504 includes a bell mouth 506 with a downstream section 508. The unducted aircraft engine 502 is inserted partially into the duct 504. The duct 504 is positioned about the unducted aircraft engine 502 so that the blades of the first fan blade assembly 520, when rotating, cannot touch or impact the duct 504. In this case, the downstream section 508 is as described for FIG. 5B. Pre-swirl vanes 514 are disposed at the downstream section 508. The pre-swirl vanes 514 are disposed along across the circumference of an inner surface of the downstream section 508. The purpose of the pre-swirl vanes 514 is to impart swirl in the direction of rotation near the tips of the blades of the first fan blade assembly 520. The pre-swirl vanes 514 reduce the loading in parts of the blades and help the tip flow match the flow needed for an unstalled operation. The vane height, V, is the distance from the surface of the downstream section 508 to the tip of the vane. Preferably, the pre-swirl vanes 514 are limited to affecting the flow near the propeller tip. For example, $V/R < 0.2$. To be effective over a sufficient annular region of the flow into the propeller, $V/R > 0.02$. Pre-swirl vanes 514 impart a swirl angle greater than 5 deg in the direction of rotation of the propeller over 70% of the vane span. In examples, the arrangement of FIG. 5C does not require the use of a fan bank. The perspective view will be similar to FIG. 5K except that the radius of the downstream section 508 near the unducted aircraft engine is slightly greater than the radius of the downstream section 508 away from the unducted aircraft engine 502.

Referring now to FIG. 5D, the duct 504 includes a bell mouth 506 with a downstream section 508. The unducted aircraft engine 502 is inserted partially into the duct 504. The duct 504 includes a raised portion (or pocket) 509, which is positioned so that (when the duct 504 is positioned about the unducted aircraft engine 502) the first fan blade assembly 520, when rotating, cannot touch or impact the duct 504. The raised portion 509 of the duct 504 also shields the first fan blade assembly 520 from side airflow 511 that would enter the propeller with a strong radially inward velocity component. In examples, the arrangement of FIG. 5D does not require the use of a fan bank. FIG. 5L shows a perspective view of the duct only for FIG. 5D.

Referring now to FIG. 5E, the duct 504 includes a bell mouth 506 with a downstream section 508. The unducted aircraft engine 502 is inserted partially into the duct 504. The duct 504 includes a raised portion (or pocket) 509, which is positioned so that the blades of the first fan blade assembly 520, when rotating, cannot touch or impact the duct 504. In this case, the raised portion 509 encloses the first fan blade assembly 520. The raised portion 509 also shields the first fan blade assembly 520 and the second unducted blade assembly from side airflow 511. This example includes full rotor coverage of the duct 504. In examples, the arrangement of FIG. 5E does not require the use of a fan bank. The perspective view will be similar to FIG. 5L except that the raised portion 509 is moved.

Referring now to FIG. 5F, the duct 504 includes a bell mouth 506 with a downstream section 508. The unducted aircraft engine 502 is inserted partially into the duct 504. The duct 504 includes a raised portion (or pocket) 509, which is configured and positioned so that the first fan blade assembly 520, when rotating, cannot touch or impact the duct 504. In this case, the raised portion 509 encloses the first fan blade assembly 520. The raised portion 509 does not need to enclose the second blade assembly 522 because, in this example, the second blade assembly 522 is stationary. The raised portion 509 also shields the first fan blade assembly 520 and the second unducted blade assembly from side airflow 511. In this example, the duct 504 is longer than previous examples and the raised portion 509 is positioned towards the middle of the downstream section 508. This example includes full rotor coverage. In examples, the arrangement of FIG. 5F does not require the use of a fan bank. This example also includes a downstream diffuser.

The example of FIG. 5F may include or create a downstream diffuser. The duct diameter is similar to the fan diameter upstream and downstream of the second blade assembly 522 and keeps air flowing in the axial direction (along central axis 501), without much of a radial flow component (perpendicular to central axis 501). Because a diffuser increases the pressure in the flow direction, a diffuser at the exit of the duct reduces the pressure in the fan thereby increasing the velocity and hence the mass flow. The perspective view will be similar to FIG. 5L except that the raised portion 509 is moved and the duct 504 is longer.

Referring now to FIG. 5G, the duct 504 includes a bell mouth 506 with a downstream section 508. The unducted aircraft engine 502 is inserted partially into the duct 504. The duct 504 includes a raised portion (or pocket) 509, which is configured and positioned so that the first fan blade assembly 520, when rotating, cannot touch or impact the duct 504. In this case, the raised portion 509 encloses the first fan blade assembly 520. The raised portion 509 does not need to enclose the second blade assembly 522 because, in this example, the second blade assembly 522 is stationary. The raised portion 509 also shields the first blade assembly 520 and the second blade assembly 522 from side airflow 511.

In this example, the duct 504 is longer than some previous examples and the raised portion 509 is towards the middle of the downstream section 508. This example includes full rotor coverage. In examples, the arrangement of FIG. 5E does not require the use of a fan bank.

This example includes a downstream diffuser. A radius of the duct 504 greater at the exit of the duct 504 than the entrance to the duct 504 creates a diffuser that increases the flow area at the exit and has the advantage of further accelerating the air flow through the duct 504 and the unducted aircraft engine 502. The perspective view will be similar to FIG. 5L except that the raised portion 509 is moved, the duct 504 is longer, and the exit of the duct has the diffusor.

Referring now to FIG. 5H, the duct 504 includes a nacelle-type inlet 541 with a downstream section 508. The unducted aircraft engine 502 is inserted partially into the duct 504. The duct 504 is positioned so that the first fan blade assembly 520, when rotating, cannot touch or impact the duct 504. In the example of FIG. 5H, a fan bank 585 supplies the air shown by the flow 503. In the cross-section shown in FIG. 5H, the duct wall cross section is airfoil-shaped rather like the spanwise cross-section of an aircraft wing. Inner surface 539 has a distance from the central axis 501 that has less variation than the outer surface 537 that has a distance from the central axis 501 that changes and tapers nacelle inlet 541 of the duct 504 to the trailing edge 543 of the duct 504. In examples, air flows over inner surface 539 as well as over outer surface 537 of the duct 504 and consequently simulates the air flow impacting the unducted aircraft engine 502 during flight. FIG. 5M shows a perspective view of the duct 504 of FIG. 5H.

It will be appreciated that these are only some examples of testing hardware structures and that other structures are possible. For example, the shape of duct can be tailored to enable good functionality with or without an upstream fan bank. FIG. 5I shows a duct 504 shaped with a rounded inlet 507 that is narrower than the bell mouth 506 of previous examples, but wider than the nacelle-type inlet 535 illustrated in FIG. 5H. With a fan bank 585 shown in FIG. 5I, flow 503 from the fan bank flows both over the outer surface of the duct 504 as within the passage formed by the inner surface the duct 504. As illustrated in FIG. 5J, because the forward part of duct 504 has a sufficiently large radius of curvature, it can also effectively accelerate and direct the air flow without a fan bank.

The various features of the test enabling hardware examples described above may be interchanged or combined differently than illustrated herein. For example, pre-swirl vanes 514 of the example illustrated in FIG. 5C may be included in any of the other examples. As another example, raised portion 509 and flow shielding illustrated in FIGS. 5D-5G can be used with a nacelle inlet 541 or rounded inlet 507. Also, as the feature of the test enabling hardware is to create a passage or passages upstream of the propeller there are other ways to achieve the desired spanwise influence and passage aspect ratio. For example, ducts may be arranged as concentric ducts (or vane rings) where an inner duct is positioned within an outer duct, and the outer duct is positioned within another duct (and so forth). In addition, portions of structures may be offset circumferentially from the central axis and different radii. For example, the vane ring structures that do not form full rings could be mounted to circumferentially alternating struts. Having different radii, neighboring structures could be interdigitated to overlap where the structures share a common circumferential extent.

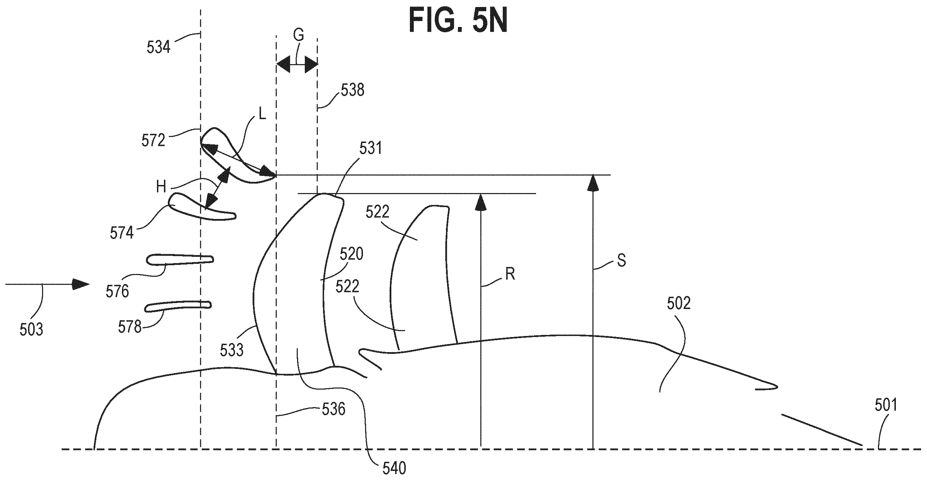

Referring now to FIGs. 5N-5R, these figures show another example of a duct structure that comprises concentric ducts. As shown, the unducted aircraft engine 502 includes the first fan blade assembly 520 and the second blade assembly 522 (for clarity, the second blade assembly 522 is only shown in FIG. 5N). The first fan blade assembly 520 is a forward rotating blade assembly and the second blade assembly 522 is a stationary blade assembly. Rotation of the blades of the first fan blade assembly 520 is centered about the central axis 501. This provides a flow-conditioning device that accelerates and directs air entering the blades of the first fan blade assembly 520 to reduce the magnitude of the radial velocity component of the air and increase the axial velocity component of the air. By using multiple passages of sufficiently high aspect ratio, the overall device can be made axially shorter than a device consisting of a single passage to accomplish the a given flow acceleration and re-direction.

The duct structure includes a first (outermost) ring 572, a second ring 574 (disposed within the first ring 572), a third ring 576 (disposed within the second ring 574), and a fourth (innermost) ring 578 (disposed within the third ring 576). The rings 572, 574, 576, and 578, are held together to form a single structure by struts 580. The structure of the rings and struts can be supported by, for example, a stand disposed in front of the unducted aircraft engine 502. The struts 580 are spaced circumferentially to hold the rings 572, 574, 576, and 578 together. The number of rings and struts can vary depending upon the particular needs of the system.

Passage length and height are defined as they were defined for the other duct configurations of previous examples but apply one of the multiple passages. The propeller tip radius, R, corresponds to the distance of the intersection of leading edge 533 with tip 531 from the central axis of rotation 501. The distance, S, corresponds to the distance between central axis 501 and the point on the surface of the first ring 572 that is closest to the propeller tip. To effectively condition the flow near the tip of the propeller, S, is preferably within 120% of the propeller tip radius, R, or S/R < 1.2. More preferably, S/R < 1.1. The inner surface of the first ring 572 forms a passage with the outer surface of the second ring 574, thus bounding the flow entering the propeller. Axial location 134 corresponds to the forward-most location on the first ring 572. Axial location 136 corresponds to the closest point of the first ring 572 to the propeller tip. Passage length, L, is the straight line distance between the points on the first ring 572 corresponding to axial location 534 and axial location 536. Passage height, H, is the shortest distance between the outer surface of the second ring 574 and the inner surface of the first ring 572. The relationship between passage length, L, and passage height, H, defines a passage aspect ratio, L/H. Preferably, L/H > 1. More preferably, as illustrated in the examples herein, L/H > 1.5.

Axial location 538 corresponds to the propeller tip. The axial gap, G, corresponds to the axial distance between the closest point of the duct structure 130 to the propeller tip, e.g., the distance between axial location 536 and axial location 538. To effectively direct the flow to the entrance of the tip, G should be as small as possible while avoiding contact with the propeller. Preferably, G is within 10% of R, i.e., G/R < 0.1. Having the structure even closer to the propeller tip would be even more effective, for example G/R < 0.05. In aspects, direct air flow enters the tip area of a blade at an angle having a magnitude less than 45 degrees from a line parallel to the central axis of rotation. In other aspects, at least one passage is created having an aspect ratio (L/H) greater than 1. In other aspects, at least one passage is created having an aspect ratio (L/H) less than 5. Swirl vanes can also be included to impart tangential velocity in the direction of rotation.

Using these structures, the airflow near the tip of the fan blade or propeller of the first fan blade assembly 520 is accelerated and the flow direction contained and controlled to approach or be more like a forward speed condition achieved during flight operations (including takeoff, landing, taxing, and in-flight operations to mention a few examples). More specifically, these structures enhance the aerodynamic loading capability in the tip region of the fan blade or propeller resulting in higher power and flow conditions that may resemble conditions during these flight operations. Advantageously, the ducts or other control structures control the airflow entering the propeller or fan to approximate the flow speed corresponding to aircraft forward speeds of about Mach 0.15 to about Mach 0.35, where Mach 1.0 is the speed of sound.

Advantageously, the surfaces guiding the airflow enter the blades of the first fan blade assembly 520 are within 120% of R where R extends radially from the central axis 501 to the tip leading edge of the blades of the first fan blade assembly 520. The structures shown in FIGs. 5N-5R also allow for an axially shorter (in the direction of the central axis 501) duct structure to be used as compared to other duct structures described herein.

In other aspects and referring to the examples in FIGs. 5A-5M, axial locations where working fluid has not yet entered the propeller are considered to be forward of propeller. The direction and speed of the working fluid increases the maximum power absorption capability of the propeller. Axial locations define positions parallel and/or along the central axis and radial locations define positions that are distant from the central axis.

In still other aspects, a propeller tip is disposed at an axial location and a radial location of the intersection of the leading edge and the tip of a propeller blade. Surfaces of the passive flow control structure are forward of the propeller tip and are configured to direct and accelerate the working fluid drawn by the propeller through the passive flow control structure. While most of the surfaces of the flow conditioning structure are passive, e.g., require no input power, the test enabling hardware can be augmented with non-passive mechanisms as well. For example, the outer rim of a duct opening upstream of the propeller can include flow injection, as could be achieved with pressurized air supplied to a ring-shaped cavity with an opening or openings that eject air with high axial velocity toward the propeller tip. Another example of a non-passive mechanism would be to bleed off the low momentum fluid, or boundary layer, from the walls of the duct inner and/or outer surface near the duct exit to enhance the axial momentum of the air entering the propeller tip.

In aspects, the propeller tip radius (R) is the distance of a selected propeller tip from the central axis. The surface of the flow conditioning structure that is nearest to the propeller tip has a rounded forward end (e.g., a nacelle-shape) to enable smooth entrance of the working fluid between the surface and the central axis as well as over the surface that is away from the central axis. In some examples, S/R < 1.1; G/R < 0.15; L/H > 1.5 where S, R, G, L, and H have been defined elsewhere herein.

In some other aspects, the velocity of the working fluid is circumferentially averaged about the central axis 501. The axial velocity component is parallel to the central axis 501 and is positive for flow from forward of the propeller toward the propeller and the radial velocity component is positive perpendicular to, and away from, the central axis 501. The propeller blade root is attached to the spinner or hub and the propeller hub is at the axial and radial location of the leading edge and root of a propeller blade.

In yet other aspects, the span location is fractional location from the propeller hub to the propeller tip; at 90% span the entering axial velocity is greater than the magnitude of radial velocity; the system intends to simulate a forward vehicle speed condition; and at 90% span the entering axial velocity is greater than 70% of the forward vehicle speed at the condition.

In some other aspects, the forward end of the surface of the flow conditioning structure that is nearest to the propeller tip has a rounded forward end (e.g., is nacelle-shaped) to enable smooth entrance of the working fluid between the surface and the central axis as well as over the surface that is away from the central axis 501.

In yet other aspects, the velocity of the working fluid is viewed in a plane that includes the central axis 501. The velocity of the working fluid is circumferentially averaged about the central axis. The axial velocity component is parallel to the central axis 501 and is positive for flow from forward of the propeller toward the propeller and the radial velocity component is positive perpendicular to, and away from, the central axis 501. The propeller blade root is attached to the spinner or hub and the propeller hub in the plane that includes the central axis 501 is at the axial and radial location of leading edge and root of a propeller blade. The span location is a fractional location from the propeller hub to the propeller tip. At 90% span the entering axial velocity is greater than the magnitude of radial velocity.

In examples, the testing system intends to simulate a forward vehicle speed condition and at 90% span the entering axial velocity is greater than 70% of the forward vehicle speed at the condition. In some aspects, the propeller power coefficient, $\frac{P}{\rho A (nD)^3} > 1.0$. In examples, the testing hardware or he unducted thrust producing apparatus is an aircraft engine or model of propeller system of aircraft engine. In aspects, the propeller of the unducted thrust producing apparatus absorbs greater than 75% of the power that corresponds to the takeoff condition.

Many of the duct structures previously described herein can be considered passive in that they do not require input power to function. However, these duct structures may be augmented by including non-passive features such as flow suction or injection that may be driven by powered devices such as pumps, fans, or blowers. This is particularly relevant and beneficial in the region of the blade tips where the aerodynamic loading of the propeller reduces to zero. In this region, operating the propeller with a passive structure alone may sometimes result in a tip region of the propeller that is less representative of a forward speed condition than over the rest of the blade span. The low axial velocity of the air entering the tip region could leave this region susceptible to flow separation or high loss that could be risk factors for aeromechanical limitations. In some aspects and according to non-passive approaches, a relatively small amount of flow (as compared to the total airflow passing through the propeller) is modified locally entering the blade tips such that this flow is more like the forward speed condition.

One non-passive approach is to remove the boundary layer, sometimes known as boundary layer suction, from the walls of the structure (e.g., the duct). This would optimally occur on the surfaces of the flow conditioning structure as close to the propeller blades as possible. This is because the boundary layer has lower momentum fluid than further from the surface of the structure and such low momentum flow can undermine the benefits provided by the flow conditioning structure. Various structures and devices, such as slots, holes, or scoops, could be used to draw boundary layer fluid off of the surface thereby reducing the thickness of the boundary layer wake that reaches the propeller.

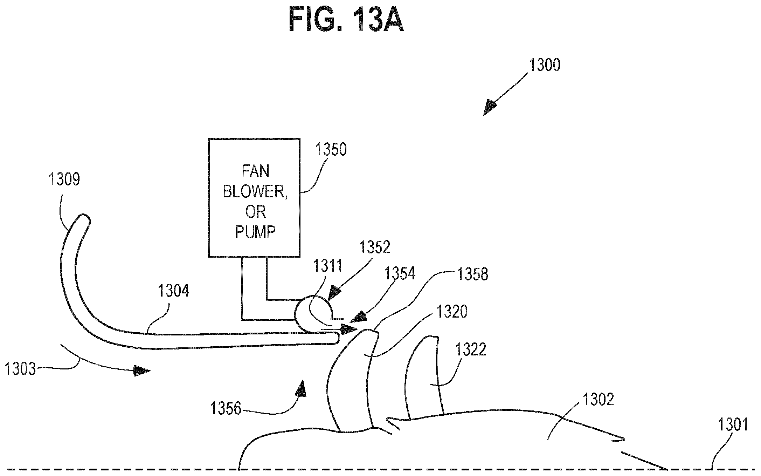

Another non-passive option is to provide an air flow injection structure that injects air at selected areas of the blades (e.g., the blade tips). Multiple configurations to achieve air flow injection are described below with respect to FIGs. 13A-13G.

Referring now to FIGs. 13A, a propeller testing system 1300 with an airflow injection structure is described and includes a duct 1304 (with a bell mouth 1309 and a duct exit 1356), an unducted aircraft engine 1302 with a first fan blade assembly 1320 and a second blade assembly 1322. This figure shows a cross-sectional view taken along a central axis 1301 of the unducted engine (unducted propulsion system) 1302 and, for simplicity, shows only the top half of the duct 1304 and unducted engine 1302 combination. In aspects, the first fan blade assembly 1320 is a forward rotating blade assembly and the second blade assembly 1322 is a stationary blade assembly. However, other configurations are possible. For example, instead of being a forward rotating blade assembly and an aft stationary blade assembly as shown, the two blade assemblies could be counter-rotating with respect to one another. As another example, the forward blade assembly could be stationary and the aft blade assembly could be rotating. As another example, the unducted propulsion system may consist of only a rotating blade assembly, e.g., a propeller. As shown, the unducted aircraft engine 1302 is at least partially inserted into the duct 1304. Air flows through the duct in the direction indicated by the arrows labeled 1303. The duct 1304 is open on both ends and forms a cavity into which the unducted aircraft engine 1302 is inserted.

In the example of FIG. 13A, the propeller testing system 1300 also includes a hollow tube 1352 disposed around the circumference of the duct exit 1356. The hollow tube 1352 has an opening 1311 facing toward blade tips 1358 of the blades of the first fan blade assembly 1320 and has receives pressurized air from a pump, fan, or blower 1350. The opening 1311 may extend around the entire hollow tube 1352. During a static test, the engine 1302 drives flow through the passive structure (e.g., the duct 1304), which approximates the conditions at a forward speed condition over most of the blade span. To make the flow at the blade tips more representative of that condition, tip injection air 1354 is supplied from the pump, fan, or blower 1350 to the hollow tube 1352 and then exits the hollow tube 1352 through the opening 1311 having properties (e.g., speed) that are similar to the air at nearly the desired forward speed condition. For example, to represent a takeoff condition for the engine 1302, the pressurized air exits the opening in the hollow tube 1352 at approximately Mach 0.2.

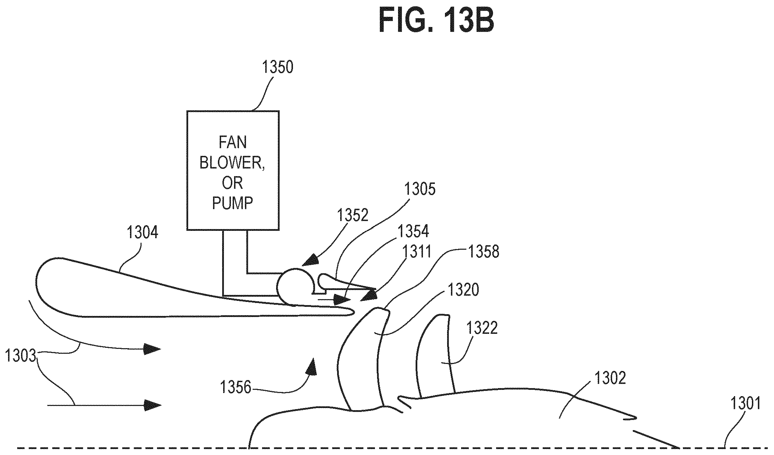

In another example and now referring to FIG. 13B, an airflow injection configuration in which the duct 1304 is configured to work either with or without an upstream fan bank is described. The duct 1304 has a nacelle shape and has an additional outer ring 1305 that, along with the struts (not shown) hold the hollow tube 1352 to the duct 1304. Other components are the same as those described with respect to FIG. 13A and are identified by like numbers. The outer ring 1305 provides stiffening as well as make properties of the tip injection air 1354 entering the blade tips 1358 more like that of air flowing across the tips 1358 during a forward speed condition of the engine 1302. In aspects, the hollow tube 1352 that supplies the tip injection air 1354 may be a removable structure, so that the flow conditioning structure can be used with or without the injection feature. It will be appreciated that the pump, fan or blower 1350 and hollow tube 1352 may be removed from the structure of FIG. 13B resulting in a completely passive structure. The outer ring 1305 would be present and provide stiffening and/or additional flow conditioning for air or other working fluid entering or approaching the propeller tip. The positioning and/or shape of the outer ring 1305 relative to the duct 1304 can also be varied depending upon the needs or requirements of the system. It will also be appreciated that many of the other passive structures described herein can use the outer ring 1305.

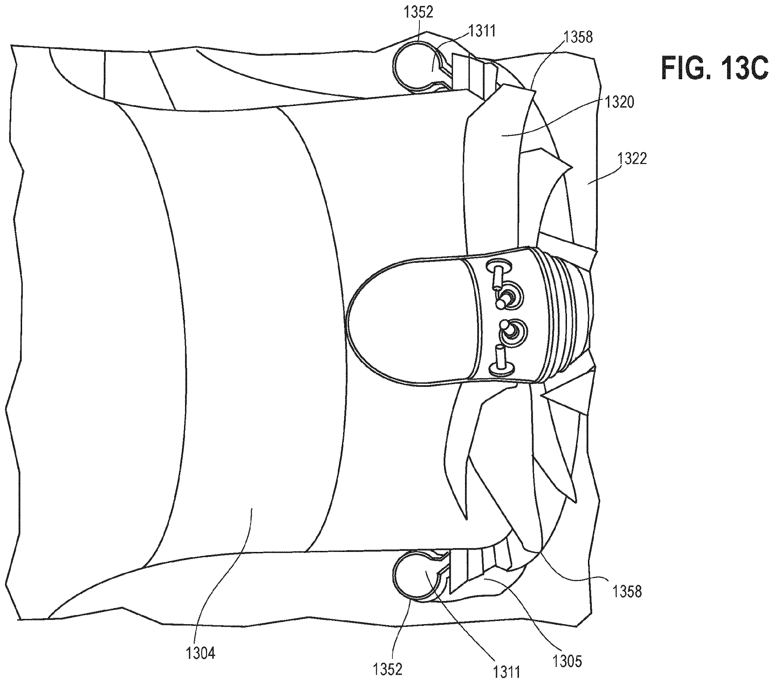

FIG. 13C shows a rendering of a cross-sectional close-up of the configuration depicted in FIG. 13B. This figure shows how the hollow tube 1352 might be placed upstream of struts (not shown in these figures) that attach the ring to the duct 1304. In such an arrangement, the struts may also condition the flow provided by the hollow tube 1352 by straightening the flow or directing at a desirable angle. For example, like the swirl vanes mounted to the interior surface of the duct 1304 (and described in previous examples herein), the struts can impart swirl in the direction of rotation to the air drawn by the propeller. The struts may be designed to impart swirl to the injected flow in the direction of rotation. As described previously, adding a component of velocity flow in the rotation direction near the tip 1358 could help reduce the aerodynamic loading, and thus, reduce the risk of tip stall.

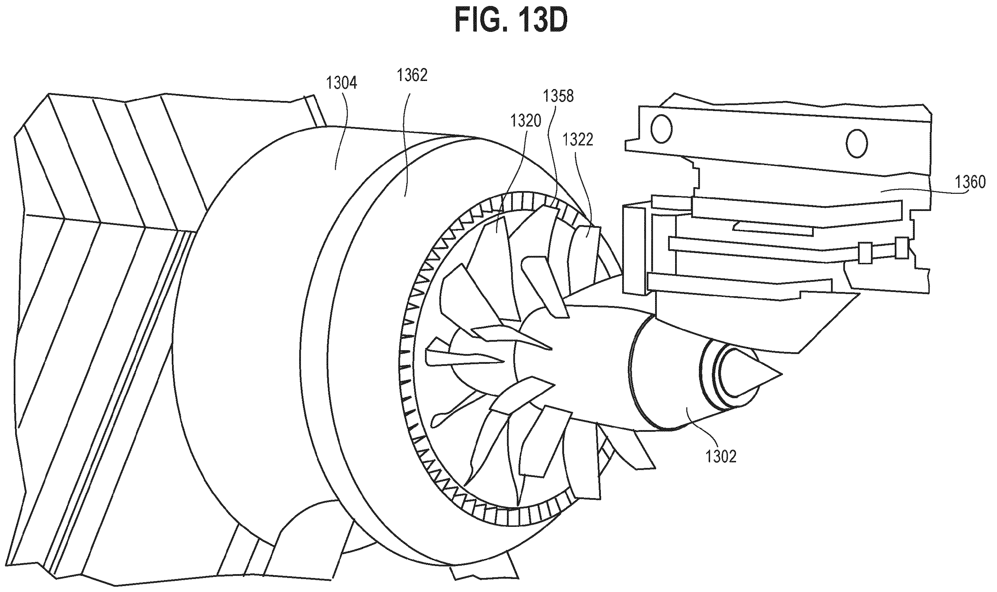

While the structures of FIGs. 13A, 13B, and 13C utilize a hollow tube 1352 as the airflow injection structure, other airflow injection structures are possible. For example, a tip injection structure combined with the duct 1304 could be achieved that does not utilize a tubelike structure (e.g., the hollow tube 1352) around the circumference of a duct 1304. Instead, a structure of some other shape and configuration could be used. For example, FIG. 13D shows an open fan engine 1302 on a test stand 1360 that uses a flow conditioning structure comprising a main duct 1304 with a smaller hollow chamber 1362 disposed around it adjacent to the main trailing edge of the duct 1304. The smaller hollow chamber 1362 is the airflow injection structure and is shaped similar to the duct 1304. The hollow chamber 1362 is supplied with pressurized air (using pumps, fans, or blowers and any attachments that facilitate providing the air to the chamber are not shown in FIG. 13D). Vanes (for mechanical or aerodynamic benefits) may be disposed at the exit of the hollow chamber 1362. In operation, pressurized air exits from the vaned exit of the smaller hollow chamber 1362 towards the blade tips 1358.

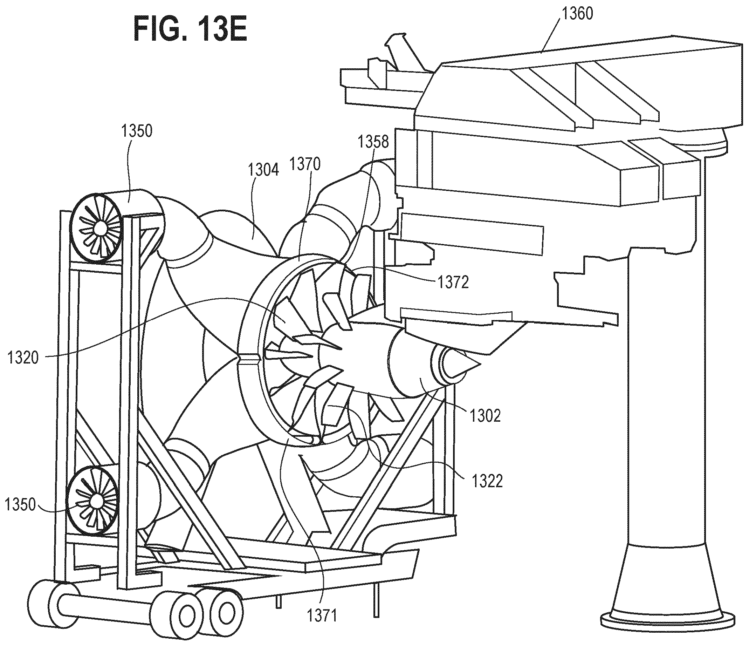

In yet another example, FIG. 13E shows an open fan engine on the test stand 1360 that uses a flow conditioning structure comprised of a main duct 1304 with multiple smaller ducts 1370, 1371, and 1372 disposed around the main duct 1304 (instead of the hollow tube 1352 or the smaller hollow chamber 1362). Each smaller duct 1370, 1371, and 1372 is coupled to a blower 1350, which supply pressurized air to the duct 1370, 1371, and 1372. The ducts 1370, 1371, and 1372 then inject the pressurized air toward the blade tips 1358. As shown, the air is supplied to each duct 1370, 1371, and 1372 via appropriately-sized blowers 1350 for the injection velocity and flow rate required.

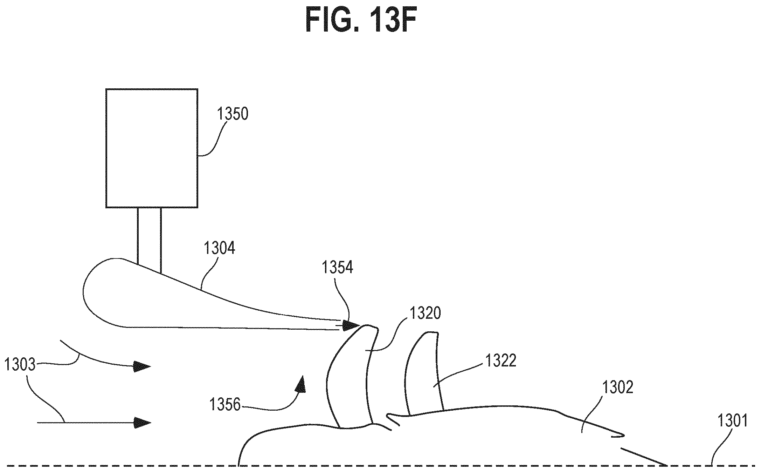

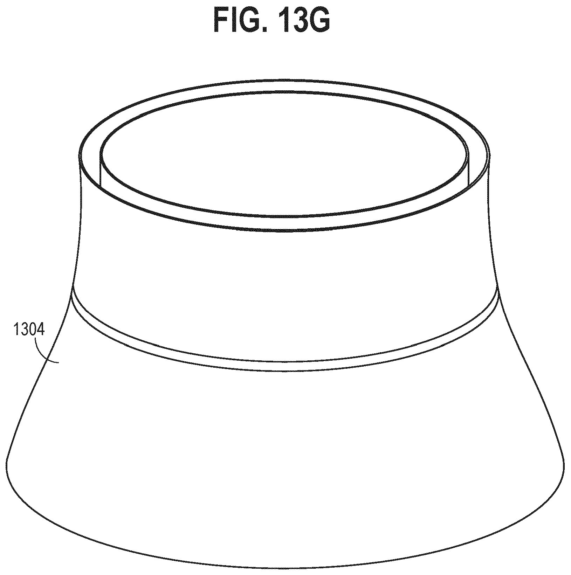

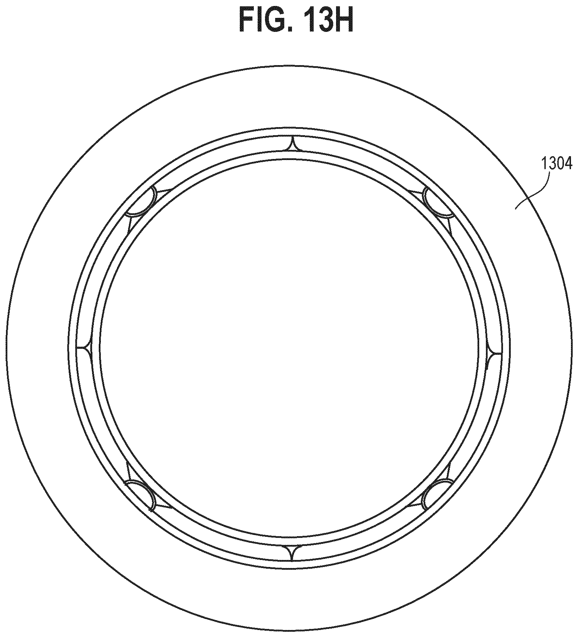

It will be appreciated that the flow conditioning structures described above are comprised of a main duct 1304 and separate hollow tubes 1352 or hollow bodies (1362 or 1370, 1371, and 1372) used to supply pressurized air to inject flow toward the tip of the propeller blades. FIGs. 13F, 13G, and 13H show a configuration that uses the duct 1304 itself to supply the air via the trailing edge that faces the leading edges of the blades near the tips of the blades. FIG. 13F is a cross sectional view of this configuration. FIG. 13G is a three-dimensional view of the hollow main structure. Figure 13H is an aft-looking-forward view of the structure illustrated in FIGs.13F and 13G. In this configuration, the duct 1304 is itself (at least partially) hollow and is used as a non-passive air injection structure. The pump, fan, or blower 1350 supplies air to the duct 1304, which, as mentioned, is hollow. The duct 1304 supplies or directs the tip injection air 1354 to the blade tips 1358. The pressurized air sources (e.g., the pump, fan, or blower 1350) or connections of that source to the duct 1304 are not shown in FIGs. 13G and 13H.

Referring now to FIG. 6, one example of an unducted aircraft engine used in these approaches is described. The unducted aircraft engine of FIG. 6 can be used with the testing hardware described in FIGs. 1A-5R and FIGs. 13A-13H. The technology described with respect to the engine of FIG. 6 relates to an unducted propulsion system, particularly the shape of an external surface of one or more housings encasing a propulsion system, for which housings can be comprised of a spinner, hub and/or nacelle. It will be appreciated that the engine architecture of FIG. 6 is one example and that other examples are possible.

A turbofan engine operates on the principle that a central gas turbine core drives a bypass fan, the fan being located at a radial location between a fan duct and the engine core. An unducted propulsion system instead operates on the principle of having the bypass fan located outside of the engine nacelle. This permits the use of larger fan blades able to act upon a larger volume of air than for a turbofan engine, and thereby improves propulsive efficiency over conventional engine designs.

Unducted propulsion systems may take the form of a propeller system, as used on a wide range of aircraft, e.g., radio-controlled model airplanes, drones, piston engine propeller aircraft, turboprop regional aircraft, and large turboprop military transports. Another type of unducted propulsion system, sometimes referred to as "open rotor", consists of two blade assemblies, one in a forward position and one in an aft position, in which at least one of them rotates about an axis to deliver power to the propulsive stream that generates thrust. Such two blade assembly systems offer some advantages, but also some challenges and are far less common than single blade row systems. As used with respect to FIG. 6, the term "propeller" may refer to the single blade assembly of an unducted propulsion system or the forward blade assembly of an unducted propulsion system comprised of two blade assemblies. As used with respect to FIG. 6, the term "fan" may refer to the either a propeller or both blade assemblies of an unducted propulsion system.

In FIG. 6, a schematic cross-sectional view of a gas turbine engine is provided, and this type of engine can be utilized in any of the approaches or as any of the engines described herein. Particularly, FIG. 6 provides an engine having a rotor assembly with a single stage of unducted rotor blades. In such a manner, the rotor assembly may be referred to herein as an "unducted fan," or the entire engine 600 may be referred to as an "unducted aircraft engine." In addition, the engine of FIG. 6 includes a third stream extending from the compressor section to a rotor assembly flow path over the turbomachine, as will be explained in more detail below.

For reference, the engine 600 defines an axial direction A, a radial direction R, and a circumferential direction C. Moreover, the engine 600 defines an axial centerline or central axis 612 that extends along the axial direction A. In general, the axial direction A extends parallel to the central axis 612, the radial direction R extends outward from and inward to the central axis 612 in a direction orthogonal to the axial direction A, and the circumferential direction extends three hundred sixty degrees (360°) around the central axis 612. The engine 600 extends between a forward end 614 and an aft end 616, e.g., along the axial direction A.

The engine 600 includes a turbomachine 620 and a rotor assembly, also referred to as a fan section 650, positioned upstream thereof. Generally, the turbomachine 620 includes, in serial flow order, a compressor section, a combustion section, a turbine section, and an exhaust defines an annular core inlet 624. The core cowl 622 further encloses at least in part a low-pressure system and a high-pressure system. For example, the core cowl 622 depicted encloses and supports at least in part a booster or low pressure ("LP") compressor 626 for pressurizing the air that enters the turbomachine 620 through the annular core inlet 624. A high pressure ("HP"), multi-stage, axial-flow compressor 628 receives pressurized air from the LP compressor 626 and further increases the pressure of the air. The pressurized air stream flows downstream to a combustor 630 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed and/or pressure values.

The high energy combustion products flow from the combustor 630 downstream to a high-pressure turbine 632. The high-pressure turbine 632 drives the HP compressor 628 through a high-pressure shaft 636. In this regard, the high-pressure turbine 632 is drivingly coupled with the HP compressor 628. The high energy combustion products then flow to a low-pressure turbine 634. The low-pressure turbine 634 drives the LP compressor 626 and components of the fan section 650 through a low-pressure shaft 638. In this regard, the low-pressure turbine 634 is drivingly coupled with the LP compressor 626 and components of the fan section 650. The LP shaft 638 is coaxial with the HP shaft 636 in this example embodiment. After driving each of the turbines 632, 634, the combustion products exit the turbomachine 620 through a turbomachine exhaust nozzle 640.

Accordingly, the turbomachine 620 defines a working gas flow path or core duct 642 that extends between the annular core inlet 624 and the turbomachine exhaust nozzle 640. The core duct 642 is an annular duct positioned generally inward of the core cowl 622 along the radial direction R. The core duct 642 (e.g., the working gas flow path through the turbomachine 620) may be referred to as a second stream.

The fan section 650 includes a fan 652, which is the primary fan in this example embodiment. For the depicted embodiment of FIG. 6, the fan 652 is an open rotor or unducted fan. As depicted, the fan 652 includes an array of fan blades 654 (only one shown in FIG. 6). The fan blades 654 are rotatable, e.g., about the central axis 612. As noted above, the fan 652 is drivingly coupled with the low-pressure turbine 634 via the LP shaft 638. For the embodiments shown in FIG. 6, the fan 652 is coupled with the LP shaft 638 via a speed reduction gearbox 655, e.g., in an indirect-drive or geared-drive configuration.

Moreover, the fan blades 654 can be arranged in equal spacing around the central axis 612. Each blade 654 has a root and a tip and a span defined therebetween.

Moreover, each blade 654 defines a central blade axis 656. For this embodiment, each blade 654 of the fan 652 is rotatable about their respective central blades axes 656, e.g., in unison with one another. One or more actuators 658 are provided to facilitate such rotation and therefore may be used to change the pitch of the blades 654 about their respective central blades axes 656.

The fan section 650 further includes a fan guide vane array 660 that includes fan guide vanes 662 (only one shown in FIG. 6) disposed around the central axis 612. For this embodiment, the fan guide vanes 662 are not rotatable about the central axis 612. Each fan guide vane 662 has a root and a tip and a span defined therebetween. The fan guide vanes 662 may be unshrouded as shown in FIG. 6 or, alternatively, may be shrouded, e.g., by an annular shroud spaced outward from the tips of the fan guide vanes 662 along the radial direction R or attached to the fan guide vanes 662.

Each fan guide vane 662 defines a central blade axis 664. For this embodiment, each fan guide vane 662 of the fan guide vane array 660 is rotatable about their respective central blades axes 664, e.g., in unison with one another. One or more actuators 666 are provided to facilitate such rotation and therefore may be used to change a pitch of the fan guide vane 662 about their respective central blades axes 664. However, in other embodiments, each fan guide vane 662 may be fixed or unable to be pitched about its central blade axis 664. The fan guide vanes 662 are mounted to a fan cowl 670.

As shown in FIG. 6, in addition to the fan 652, which is unducted, a ducted fan 684 is included aft of the fan 652, such that the engine 600 includes both a ducted and an unducted fan which both serve to generate thrust through the movement of air without passage through at least a portion of the turbomachine 620 (e.g., without passage through the HP compressor 628 and combustion section for the embodiment depicted). The ducted fan is rotatable at about the same axis as the fan blade 654. The ducted fan 684 is, for the embodiment depicted, driven by the low-pressure turbine 634 (e.g., coupled to the LP shaft 638). In the embodiment depicted, as noted above, the fan 652 may be referred to as the primary fan, and the ducted fan 684 may be referred to as a secondary fan. It will be appreciated that these terms "primary" and "secondary" are terms of convenience, and do not imply any particular importance, power, or the like.

The ducted fan 684 includes a plurality of fan blades (not separately labeled in FIG. 6). The fan blades of the ducted fan 684 can be arranged in equal spacing around the central axis 612. Each blade of the ducted fan 684 has a root and a tip and a span defined therebetween.

The fan cowl 670 annularly encases at least a portion of the core cowl 622 and is generally positioned outward of at least a portion of the core cowl 622 along the radial direction R. Particularly, a downstream section of the fan cowl 670 extends over a forward portion of the core cowl 622 to define a fan flow path or fan duct 672. According to this aspect, the fan flow path or fan duct 672 may be understood as forming at least a portion of the third stream of the engine 600.

Incoming air may enter through the fan duct 672 through a fan duct inlet 676 and may exit through a fan exhaust nozzle 678 to produce propulsive thrust. The fan duct 672 is an annular duct positioned generally outward of the core duct 642 along the radial direction R. The fan cowl 670 and the core cowl 622 are connected together and supported by a plurality of substantially radially extending, circumferentially spaced stationary struts 674 (only one shown in FIG. 6). The stationary struts 674 may each be aerodynamically contoured to direct air flowing thereby. Other struts in addition to the stationary struts 674 may be used to connect and support the fan cowl 670 and/or core cowl 622. In many embodiments, the fan duct 672 and the core duct 642 may at least partially co-extend (generally axially) on opposite sides (e.g., opposite radial sides) of the core cowl 622. For example, the fan duct 672 and the core duct 642 may each extend directly from the leading edge 644 of the core cowl 622 and may partially co-extend generally axially on opposite radial sides of the core cowl.

The engine 600 also defines or includes an inlet duct 680. The inlet duct 680 extends between an engine inlet 682 and the core inlet 624/fan duct inlet 676. The engine inlet 682 is defined generally at the forward end of the fan cowl 670 and is positioned between the fan 652 and the fan guide vane array 660 along the axial direction A. The inlet duct 680 is an annular duct that is positioned inward of the fan cowl 670 along the radial direction R. Air flowing downstream along the inlet duct 680 is split, not necessarily evenly, into the core duct 642 and the fan duct 672 by a splitter or leading edge 644 of the core cowl 622. The inlet duct 680 is wider than the core duct 642 along the radial direction R. The inlet duct 680 is also wider than the fan duct 672 along the radial direction R.

During operation of the engine 600 at an operating condition, the engine 600 generates a total thrust, $Fn_{Total}$. The operating condition may be operation of the engine 600 at a rated speed during standard day operating condition. The total thrust is a sum of a first stream thrust, $Fn_{1S}$ (e.g., a primary fan thrust generated by an airflow over the fan cowl 670 and core cowl 622, generated by the fan 652), a third stream thrust, $Fn_{3S}$ (e.g., a thrust generated by an airflow through the fan duct 672 exiting through the fan exhaust nozzle 678, generated at least in part by the ducted fan 684), and a second stream thrust, $Fn_{2S}$ (e.g., a thrust generated by an airflow through the core duct 642 exiting through the turbomachine exhaust nozzle 640).

Notably, for the embodiment depicted, the engine 600 includes one or more features to increase an efficiency of the third-stream thrust, $Fn_{3S}$. In particular, the engine 600 further includes an array of inlet guide vanes 686 positioned in the inlet duct 680 upstream of the ducted fan 684 and downstream of the engine inlet 682. The array of inlet guide vanes 686 are arranged around the central axis 612. For this embodiment, the inlet guide vanes 686 are not rotatable about the central axis 612. Each inlet guide vanes 686 defines a central blade axis (not labeled for clarity), and is rotatable about their respective central blade axes, e.g., in unison with one another. One or more actuators 668 are provided to facilitate such rotation and therefore may be used to change a pitch of the inlet guide vanes 686 about their respective central blades axes. However, in other embodiments, each inlet guide vanes 686 may be fixed or unable to be pitched about its central blade axis.

Further, located downstream of the ducted fan 684 and upstream of the fan duct inlet 676, the engine 600 includes an array of outlet guide vanes 690. As with the array of inlet guide vanes 686, the array of outlet guide vanes 690 are not rotatable about the central axis 612. However, for the embodiment depicted, unlike the array of inlet guide vanes 686, the array of outlet guide vanes 690 are configured as fixed-pitch outlet guide vanes.

Further, it will be appreciated that for the embodiment depicted, the fan exhaust nozzle 678 of the fan duct 672 is further configured as a variable geometry exhaust nozzle. In such a manner, the engine 600 includes one or more actuators 692 for modulating the variable geometry exhaust nozzle. For example, the variable geometry exhaust nozzle may be configured to vary a total cross-sectional area (e.g., an area of the nozzle in a plane perpendicular to the central axis 612) to modulate an amount of thrust generated based on one or more engine operating conditions (e.g., temperature, pressure, mass flowrate, etc. of an airflow through the fan duct 672). A fixed geometry exhaust nozzle may also be adopted.

The combination of the array of inlet guide vanes 686 located upstream of the ducted fan 684, the array of outlet guide vanes 690 located downstream of the ducted fan 684, and the fan exhaust nozzle 678 may result in a more efficient generation of third-stream thrust, $Fn_{3S}$, during one or more engine operating conditions. Further, by introducing a variability in the geometry of the inlet guide vanes 686 and the fan exhaust nozzle 678, the engine 600 may be capable of generating more efficient third-stream thrust, $Fn_{3S}$, across a relatively wide array of engine operating conditions, including takeoff and climb (where a maximum total engine thrust $Fn_{Total}$, is generally needed) as well as cruise (where a lesser amount of total engine thrust, $Fn_{Total}$, is generally needed).

Referring still to FIG. 6, air passing through the fan duct 672 may be relatively cooler (e.g., lower temperature) than one or more fluids such as air utilized in the turbomachine 620. In this way, one or more heat exchangers 699 may be positioned in thermal communication with the fan duct 672. For example, one or more heat exchangers 699 may be disposed within the fan duct 672 and utilized to cool one or more fluids from the core engine with the air passing through the fan duct 672, as a resource for removing heat from a fluid, e.g., compressor bleed air, oil or fuel.

Various sensors are shown in FIG. 6. Measurements from these sensors are utilized during ground and/or in-flight testing as has been described elsewhere herein. These sensors are coupled to a controller.

For example, an engine control torque sensor 602 is coupled to the LP shaft 638 to measure torque. At the exit through the fan exhaust nozzle 678, a first pressure sensor 604 (measuring total pressure), a second pressure sensor 606 (measuring static pressure), and a first temperature sensor 608 (measuring total temperature) are deployed. At the turbomachine exhaust nozzle 640, a third pressure sensor 610 (measuring total pressure) and a second temperature sensor 613 (measuring total temperature) are deployed. At the engine inlet 682, a fourth pressure sensor 615 (measuring total pressure), a fifth pressure sensor 617 (measuring static pressure), and a third temperature sensor 618 (measuring total temperature) are deployed. It will be appreciated that other sensors may be deployed at other locations and the sensors can be of the types described or other types.

Referring now to FIG. 7, another example of an engine that can be utilized with the testing hardware of FIGs. 1A-5R is described. FIG. 7 shows an elevational cross-sectional view of an exemplary embodiment of an unducted thrust producing system 710. It will be appreciated that the engine architecture of FIG. 7 is one example and that other examples are possible.

As is seen from FIG. 7, the unducted thrust producing system 710 takes the form of an open rotor propulsion system and has a rotating fan blade assembly 720 depicted as a propeller assembly which includes an array of airfoil blades 721 around a central axis 711 of the unducted thrust producing system 710. The airfoil blades 721 are arranged in typically equally spaced relation around the central axis 711, and each of the airfoil blades 721 has a root 723 and a tip 724 and a span defined therebetween and a central blade axis 722. Unducted thrust producing system 710 includes a gas turbine engine having a gas generator 740 and a low-pressure turbine 750. Left- or right- handed engine configurations can be achieved by mirroring the airfoil blades 721 and vanes 731, and within the low-pressure turbine 750. As an alternative, an optional reversing gearbox (located in or behind the low-pressure turbine 750 or combined or associated with power gearbox 760) permits a common gas generator and low-pressure turbine to be used to rotate the fan blades either clockwise or counterclockwise, e.g.,, to provide either left- or right-handed configurations, as desired, such as to provide a pair of oppositely rotating engine assemblies as may be desired for certain aircraft installations. Unducted thrust producing system 710 in the embodiment shown in FIG. 7 also includes an integral drive (power gearbox 760) which may include a gearset for decreasing the rotational speed of the propeller assembly relative to the low-pressure turbine 750.

Unducted thrust producing system 710 also includes in the exemplary embodiment a non-rotating stationary element 730 which includes an array of vanes 731 also disposed around central axis 711, and each vane 731 has a root 733 and a tip 734 and a span defined therebetween. The vanes 731 may be arranged such that they are not all equidistant from the rotating assembly and may optionally include an annular shroud or duct distally from the central axis 711 or may be unshrouded. The vanes 731 are mounted to a stationary frame and do not rotate relative to the central axis 711 but may include a mechanism for adjusting their orientation relative to their axis 790 and/or relative to the airfoil blades 721. For reference purposes, FIG. 7 also depicts a Forward direction denoted with arrow F, which in turn defines the forward and aft portions of the system. As shown in FIG. 7, the rotating element (in this case, the fan blade assembly 720) is located forward of the gas generator 740 in a "puller" configuration, and the exhaust 780 is located aft of the non-rotating stationary element 730. In addition to the noise reduction benefit, the duct provides a benefit for vibratory response and structural integrity of the stationary vanes 731 by coupling them into an assembly forming an annular ring or one or more circumferential sectors, e.g., segments forming portions of an annular ring linking two or more vanes 731 such as pairs forming doublets. The duct may allow the pitch of the vanes to be varied as desired.

A significant, perhaps even dominant, portion of the noise generated by the disclosed fan concept is associated with the interaction between wakes and turbulent flow generated by the upstream blade-row and its acceleration and impingement on the downstream blade-row surfaces. By introducing a partial duct acting as a shroud over the stationary vanes, the noise generated at the vane surface can be shielded to effectively create a shadow zone in the far field thereby reducing overall annoyance. As the duct is increased in axial length, the efficiency of acoustic radiation through the duct is further affected by the phenomenon of acoustic cut-off, which can be employed, as it is for conventional aircraft engines, to limit the sound radiating into the far- field. Furthermore, the introduction of the shroud allows for the opportunity to integrate acoustic treatment as it is currently done for conventional aircraft engines to attenuate sound as it reflects or otherwise interacts with the liner. By introducing acoustically treated surfaces on both the interior side of the shroud and the hub surfaces upstream and downstream of the stationary vanes, multiple reflections of acoustic waves emanating from the stationary vanes can be substantially attenuated.

In operation, the rotating airfoil blades 721 are driven by the low-pressure turbine via gearbox 760 such that they rotate around the central axis 711 and generate thrust to propel the unducted thrust producing system 710, and hence an aircraft to which it is associated, in the forward direction F.

It may be desirable that either or both of the sets of airfoil blades 721 and vanes 731 incorporate a pitch change mechanism such that the blades can be rotated with respect to an axis of pitch rotation either independently or in conjunction with one another. Such pitch change can be utilized to vary thrust and/or swirl effects under various operating conditions, including to provide a thrust reversing feature which may be useful in certain operating conditions such as upon landing an aircraft.

Vanes 731 are sized, shaped, and configured to impart a counteracting swirl to the fluid so that in a downstream direction aft of both rows of blades the fluid has a greatly reduced degree of swirl, which translates to an increased level of induced efficiency. Vanes 731 may have a shorter span than airfoil blades 721, as shown in FIG. 7, for example, 50% of the span (the distance between tips) of airfoil blades 721, or may have longer span or the same span as airfoil blades 721 as desired. Vanes 731 may be attached to an aircraft structure associated with the propulsion system, as shown in FIG. 7, or another aircraft structure such as a wing, pylon, or fuselage. Vanes 731 of the stationary element may be fewer or greater in number than, or the same in number as, the number of airfoil blades 721 of the rotating element and typically greater than two, or greater than four, in number.

In the embodiment shown in FIG. 7, an annular 360-degree inlet 770 is located between the fan blade assembly 720 and the fixed or non-rotating stationary element 730 and provides a path for incoming atmospheric air to enter the gas generator 740 radially inwardly of the non-rotating stationary element 730. Such a location may be advantageous for a variety of reasons, including management of icing performance as well as protecting the annular 360-degree inlet 770 from various objects and materials as may be encountered in operation.

FIG. 7 illustrates what may be termed a "puller" configuration where the thrust-generating rotating element (in this case, the fan blade assembly 720) is located forward of the gas generator 740. The selection of "puller" or "pusher" configurations may be made in concert with the selection of mounting orientations with respect to the airframe of the intended aircraft application, and some may be structurally or operationally advantageous depending upon whether the mounting location and orientation are wing-mounted, fuselage-mounted, or tail-mounted configurations.

Various sensors are shown in FIG. 7. Measurements from these sensors are utilized during ground and/or in-flight testing as has been described elsewhere herein. In aspects, these sensors are coupled to a controller.

For example, an engine control torque sensor 762 is coupled to an engine shaft 738 (e.g., an LP shaft) to measure torque. At the exit through the exhaust 780, a first pressure sensor 752 (measuring total pressure) and a first temperature sensor 754 (measuring total temperature) are deployed. At the annular 360-degree inlet 770, a second pressure sensor 772 (measuring total pressure), a third pressure sensor 774 (measuring static pressure), and a second temperature sensor 776 (measuring total temperature) are deployed. It will be appreciated that other sensors may be deployed at other locations and the sensors can be of the types described or other types.

The approaches and structures described with respect to FIGs. 1A-5R and FIGs. 13A-H can be used in different engine testing processes, approaches, and sequences. In one example, the engine testing processes can be ground testing-only processes where the engine is tested exclusively on the ground. In other examples, the testing process can be a process used on both the ground and later (without the testing hardware of FIGs. 1A-5R or FIG. 13A-H) in the air aboard an aircraft as described below with respect to FIGs. 8-12.

Referring now specifically to FIG. 8, one example of an approach for thrust calibration in an aircraft engine is described. At step 802, scale model testing and analysis for a particular aircraft engine (e.g., a turboprop aircraft engine) is performed. In aspects, a small (e.g., 10% of actual engine size in terms of engine dimensions and/or engine performance characteristics) model of an engine can be built and used for this testing. Different analytical (e.g., software) tools, simulation tools, or testing programs can also be used to determine or model performance results for an engine having a specific design (e.g., propellers or fan blades of a certain size or pitch). For example, commercially available software tools with computational fluid dynamic (CFD) capabilities can be used. For example, the CFX software tool produced by Ansys, Incorporated may be used.

In one specific example, for a particular power applied to the propeller (or fan blade) of an engine, a particular pitch angle of the propeller (or fan blade), and/or other parameters, the analytical tool determines how much thrust will be provided by the propeller (or fan blade) and the efficiency of the engine having a particular engine design and configuration. In other aspects, the analytical tool, scale model testing, and/or full-scale engine testing can consider configurations or effects produced by test hardware (e.g., that will emulate flight velocity), test stands, or other testing devices. Analytical tools may also be used in conjunction with scale model test results to translate the scale model test results to full scale characteristics.

In another particular example, a scale model of an engine (that is smaller in size to the actual engine such as 10% the actual size) is built. For a particular power applied to the propeller (or the fan blade) of the scale model of an engine, a particular pitch angle of the propeller of the scale model, and/or other parameters, measurements of parameters of the scale model of the engine may be made (such as thrust). An analytical tool (e.g., the CFX analytical tool) determines how much thrust will be provided by the propeller (e.g., by using various equations with the measured parameters being the inputs to the equations) and the efficiency of the full-scale engine represented by the scale model. In other words, scale model results (scale model thrust) can be measured at the scale model and the analytical tool used to project these results into what would be seen on a full-scale engine (e.g., the scale model thrust measured on the scale model is projected to full-scale thrust seen on a full-scale engine).

The results of the scale model testing is used to create or define an analytical model representing the performance of the full-scale engine in various configurations including installed on the aircraft, and in ground-level test cells or open-air test facilities with associated testing hardware. The analytical model may be represented or defined as an electronic file (with information including the performance results), including one or more equations (e.g., describing engine performance or thrust determination), engine performance or operating parameters, and/or some other elements related to how the engine operates, the engine's dimensions, efficiency, or other characteristics.

In other examples, the analytical model is a machine learning model (e.g., a neural network) that has been trained using past engine data. These analytical models may be used in a predictive mode to project engine performance with the basic boundary conditions of throttle setting and flight condition. The analytical model may also be used in data reduction or synthesis mode, using supplementary instrumentation to better determine component and overall performance levels.

At step 804, a torque offset is determined for one or more engine control torque sensors on a specific aircraft engine that is to be tested. In this step, the one or more engine control torque sensors are calibrated to ensure they provide highly or extremely accurate measurements. It will be appreciated that this step allows for more accurate determinations as described below, but in some examples the torque sensor need not be calibrated and this step may be omitted. It will be appreciated that the torque sensor that is being calibrated (referred to herein as an "engine control torque sensor") is different than other torque sensors not disposed in the engine (referred to herein as a "precision torque meter") but used in the ground testing to calibrate the engine control torque sensors.

One approach at calibrating an engine control torque sensor is now described. An unducted aircraft engine is run without its fan blades or propellers. By removing the fan blades or propellers, the power they would absorb can be directed out of a shaft in the front of a gearbox of the engine to a precision torque meter and a load absorbing device such as a water brake. The precision torque meter measures the torque or power of the unducted aircraft engine that would normally be consumed by the fan blades or propellers. After the precision torque measurement is made, the power from the unducted aircraft engine without propellers can be absorbed into a device such as the water brake. As is known, power = torque * speed thus a speed measurement can be taken with the torque measurement to determine power.

An engine control torque sensor on or at the engine measures the torque of the engine. The engine control torque sensor has its readings adjusted according to the precision torque meter. For example, if the engine control torque sensor measures 5000 units of force (e.g., Newton meters or pound feet) and the precision torque meter measures 5005 units of force (e.g., Newton metes or pound feet), the measurement results of the engine control torque sensor can be adjusted. In this particular example, an offset value of 5 (representing the difference between the precision torque meter measurement and the engine measurement) might be added to the measurement results of the engine control torque sensor to implement the calibration. The value of 5 can also be expressed as a percentage difference and added to all other torque readings to obtain calibrated torque readings. Since the precision torque meter is a more accurate sensor than the engine control torque sensor, the engine control torque sensor will add a difference (e.g., a percentage difference) to the measured value it measures to obtain a calibrated value, and thereby obtain a more accurate reading.

In a second example, a rig or other apparatus or structure holding the engine control torque sensor is constructed. In this second example, the engine control torque sensor is completely removed from the engine and/or has never been placed in the engine (e.g., the engine is being built). A highly accurate measurement device (e.g., precision torque meter) is connected to the rig (e.g., to its shaft) to measure torque. The values of the engine control torque sensor in the rig can then be correlated to the torque values measured with the highly accurate measuring device (the precision torque meter) as in the preceding example. The engine control torque sensor in the rig can then be integrated with a full-scale engine. In aspects, every engine will have a torque sensor, which requires calibration to a precision torque meter using this approach.

In a third example, if the fan blades or propellers are not removed, a precision torque meter and water brake may not be needed to measure torque and absorb load. In this case the propeller would be relied upon to extract load and a precision torquemeter could be positioned between the propeller and the gearbox within the aircraft engine. In this way, a precise torque meter may be positioned between the fan blades or propellers and the gearbox of an engine. The engine control torque sensor may be calibrated as described above in the other two examples.

Every engine or engines needing a high accuracy in-flight thrust prediction will have an engine control torque sensor, which requires calibration to a precision torque meter using one of these three approaches. However, as mentioned, it is also possible to omit this step and rely upon the accuracy of an uncalibrated engine control torque sensor.

At step 806, the engine is on the ground (not engaging in flight operations aboard an aircraft) in a simulated in-flight velocity testing environment (or under conditions on the ground that are as near to flight conditions as possible) and the goal is to determine any residual errors and/or unaccounted-for engine behaviors (whatever the source of these behaviors) of the engine in or affecting a thrust determination. For a given set of parameters, the engine is run (e.g., at full power) and fan/propeller torque and overall engine thrust are measured (e.g., using appropriate sensors). Individual ducted engine exhaust streams can be analytically predicted or instrumented to evaluate their thrust contributions. Other instrumentation may be used to measure or validate propeller full scale operation. Nacelle leakage and exhaust duct(s) area measurements can also be performed.

Various ground testing structures can be utilized to facilitate the ground testing. In one example, the ground testing is performed where the engine hangs from a structure above the ground that includes instrumentation to measure engine operation produced axial force (thrust). In another example, the engine is tested in a facility with a wall. The wall has a hole or opening sized to approximately the diameter of the engine propeller. The ground test is performed with the engine being placed nearly flush against the wall. In still other examples, testing hardware (e.g., as described with respect to FIGs. 1A-5R and FIGs. 13A-H herein) can be used to control the speed of the air being applied to the engine to correspond to the speed achieved with aircraft forward speeds of 0.25 to 0.35 Mach.

The thrust and fan/propeller torque actual measurements are compared to the thrust and torque predicted by the analytical model. In aspects, the differences can be considered errors and are used to create one or more modifiers to calibrate model thrust and/or balance the errors of thrust and torque. In aspects, the modifier is one or more arithmetic operators, operations, values, or constructs that are applied to components, structures, equations, or elements of the analytic model. A modifier can take the form of one or more scalar values (e.g., used to modify or scale any component, structure, equation, or element of the analytical model), one or more adder values (e.g., values that are added to any component, structure, equation, or element of the analytical model), one or more multipliers (e.g., values that are multiplied to any component, structure, equation, or element of the analytical model), one or more curves or tables of scalar values, one or more curves or table of adders or multipliers, or any combination thereof. The modifiers are used to adjust thrust values for in-flight cases where direct thrust measurement is not practical and in some aspects are numerical offset values. Higher valued modifiers may indicate higher error amounts (higher corrections) while lower valued modifiers may indicate lower error amounts (lower corrections). The modifiers are incorporated into, included with, applied to, and/or somehow represented by the analytical model to form a correlated model of the engine.

Multiple modifiers may be determined and applicable for different operational conditions or states of the aircraft. For example, one modifier (or group of modifiers) may be calculated for takeoff conditions, another modifier (or group of modifiers) for idle conditions, and another modifier (or group of modifiers) for cruising conditions. When used, the multiple modifiers (or multiple groups of modifiers) are incorporated into, included with, applied to, and/or somehow represented by the model to form a correlated model of the engine.

At step 808, the aircraft engine is installed on-board an aircraft. In this case, the aircraft engine is put aboard an aircraft and tested (e.g., tested during actual in-flight operations). In-flight operations may include taxi operations on the ground, aircraft takeoff, aircraft landing, and aircraft cruising operations (and combinations of these operations) to mention a few examples.

During these actual flight operations, the aircraft engine is an unducted aircraft engine and produces thrust. In one example, Thrust = Thrust X + Thrust Y +Thrust Z, where X, Y, and Z are exhaust or air streams emulating from the engine and Thrust is the total thrust produced by the unducted aircraft engine. In aspects, the thrust in the X stream (Thrust X) is the propeller or fan thrust modeled using or according to the correlated model, which includes, incorporates, or accounts for the modifiers obtained during ground testing. The correlated model is utilized to make a prediction of the thrust in the X stream. Thrust Y and Thrust Z are thrust from other "streams" in the engine (e.g., Thrust Y may be from an air stream flowing through the engine core and Thrust Z from a "third"" stream around the core but still in the engine). Thrust in the Y and Z streams can be calculated using readings from other aircraft and engine sensors to determine the thrust in these streams.

In aspects, sensors on the aircraft and engine obtain measurements during the on-board testing. Aircraft and engine pressure sensors may measure pressures. Aircraft and engine temperature sensors may measure temperatures. Engine shaft speed sensors may measure engine shaft speeds. The calibrated engine propeller or engine control torque sensor (that has been calibrated according to the process of step 804) measures a highly accurate torque. These may be applied to or utilized with the correlated model to obtain an adjusted or calibrated thrust (e.g., "Thrust" in the previous example) as described above. In one example, the thrust contribution of the propeller is calculated from the correlated model (e.g., an analytical map) using measured flight conditions, propeller rpm, propeller pitch angle, propeller outlet guide vane (OGV) angle (applicable to fans of some unducted aircraft engines), and torque along with the calibration modifiers in the model can be applied to the calculated thrust (e.g., as additions, subtractions, multipliers, and/or divisors) to determine an adjusted calculated thrust. In some aspects, pressure and temperature sensors throughout the engine are used in concert with known nozzle coefficients to project the thrust contributions of the propelling nozzles in the engine.

Once the total calibrated thrust of the aircraft engine is determined, it can be compared to ratings or needs that are required by an aircraft manufacturer or operator. For example, the total calibrated thrust may be 5000 units of thrust force (e.g., Newtons or pounds), but 6000 units of thrust force might be needed. Consequently, selected equipment, parts, or components in the aircraft or engine can be examined, and adjustments made to these devices to thereby adjust the thrust upward. In aspects, the thrust units are units of pound force (English units) or Newtons (metric units).

It can also be appreciated that this process can also be applied to a production environment. For example, testing occurs only on the ground as described with respect to step 806 and the thrust produced by each engine is tracked and/or calibrated prior to customer shipment. This process allows the verification of engine performance before flight and provides a way to consistently test every production engine to verify the thrust level prior to customer shipment.

More specifically, an approach for production testing of unducted aircraft engines includes obtaining a correlated analytical model of an unducted aircraft engine (e.g., obtained with step 806 of FIG. 8). The unducted aircraft engine includes an engine control torque sensor. The unducted aircraft engine is run at full power during a ground test. Full power is the power of the engine required at takeoff of the aircraft. The unducted aircraft engine is tested using testing hardware that simulates at least some flight-like or operational conditions for the unducted aircraft engine during the ground test.

The thrust of the unducted aircraft engine is measured during the ground test to obtain a measured thrust. The torque of the unducted aircraft engine is measured during the ground test using the engine control torque sensor to obtain a measured torque.

A predicted torque and a predicted thrust of the unducted aircraft engine are obtained using the correlated analytical model. The measured torque is compared to the predicted torque and the measured thrust is compared to the predicted thrust to obtain comparison results. Based upon the comparison results, control software for the engine is selectively adjusted. This adjustment may include the manually or automatic opening and closing of switches that control or affect operations of a full engine digital engine control (FADEC) device (which is a device disposed with the engine that controls engine operations for engines of the aircraft). In some specific aspects, the selection is done through a programmable plug with push-pull pins that FADEC control software running on the FADEC device interprets to tune the engine thrust to an accurate target level. The FADEC device implements control software for the engine.

In aspects, the FADEC device is a computer or other processing device that controls engine operations. For example, engine timing, the angle to set propellers or fan blades, when to open or close engine valves, and how much fuel goes into combustor of the engine may be controlled by the FADEC device to achieve an accurate takeoff thrust.

In one example, the predicted (target and calibrated and expected value of thrust) is 100 units (e.g., Newtons), but the actual measured value is 99 units. The settings of the FADEC device (set using, for example, switches or pins, which are manually or automatically set by a user) are read by the FADEC device (which is connected to the switches or pins) to set, change, or modify thrust settings of the engine. In one example, setting the pins in one particular combination might result in opening a valve of the unducted aircraft engine more or less. In further aspects, it has been determined ahead of time which pins or switches (or combinations of switches) to throw, set, and/or adjust to obtain a certain thrust. The settings of the pins or switches are read by the FADEC and the FADEC adjusts its operations accordingly to calibrate the full power thrust.

Referring now to FIG. 9, one example of a system 900 to perform engine ground testing includes testing hardware 902, an aircraft engine 904, a controller 906, a memory 908, and a model 910 stored in the memory 908. An engine control torque sensor 905 (e.g., that in some examples has been calibrated according to the process of step 804) and other engine sensors 907 (e.g., pressure, speed, or temperature, fuel flow, and variable system setting positions) are coupled to the controller 906 and the aircraft engine 904. In one example, the system of FIG. 9 is used to perform the testing described by step 806 of FIG. 8. Furthermore, the system and setup of FIG. 9 is one example. One example of an additional setup that is particularly applicable for unducted engines has been discussed previously with respect to FIGs. 2A-2F. It will be appreciated that the controller 906, the memory 908, and the model 910 may together be incorporated into a single electronic device such as a personal computer, laptop, smart phone or other similar device. Such an electronic device may be disposed at the location of ground testing or at some other location.

The testing hardware 902 may include testing stands, devices, structures, and/or other physical elements that support aircraft engine 904 during testing and/or simulate in-flight conditions for the aircraft engine 904. For example, these structures and devices enable the aircraft engine 904 to create air flow that impacts or flows about the aircraft engine 904 at in-flight velocities, other in-flight conditions (e.g., temperatures or pressures to mention two examples), or conditions that approach in-flight conditions as much as possible. In examples, the aircraft engine 904 and testing hardware 902 produces air speeds of that approximate the air speeds when the aircraft is moving at about Mach 0.25 to about Mach 0.35, where Mach 1.0 is the speed of sound.

In one example, a testing setup is used where the aircraft engine 904 is suspended above the ground and sensors are positioned about the aircraft engine 904 when the aircraft engine 904 is operated at full power. As mentioned and in aspects, the aircraft engine 904 is an unducted aircraft engine where additional testing hardware is needed to properly and adequately simulate in-flight air velocity (or as near to in-flight velocity as possible) applied to and flowing about the unducted aircraft engine. In some examples, this additional testing hardware comprises a duct, cowl or enclosure surrounding the front of the aircraft engine 904 where the cowl provides a structure allowing the aircraft engine 904 to suck air (in a movement towards the aircraft engine 904) and the air generally increases in speed as it nears the aircraft engine 904 so that the air is moving at speeds that approximate the speeds that approximate the airflow speeds when the aircraft forward speed is an in-flight or near in-flight speed (e.g., about 0.25 Mach to about 0.35 Mach) when it strikes or arrives at the aircraft engine 904. Examples of additional testing hardware are described with respect to FIGs. 1A-5R. In another example, industrial strength fans (arranged as a fan bank) can be used to produce air that is moving at in-flight velocities when it strikes or arrives at the aircraft engine 904.

The testing hardware 902 may be controlled by the controller 906 or controlled in part by the controller 906. For example, when the testing hardware 902 is used to create in-flight air flow velocity during the test (or as near to in flight velocities as possible), the controller 906 may control or operate the mechanisms (e.g., fans, ducts, or other structures) that create the appropriate testing conditions. In other examples, the testing hardware 902 does not need to be activated and/or controlled by the controller 906.

The aircraft engine 904 is an unducted aircraft engine such that the fan blades of the engine are not enclosed or covered by a cover or enclosure but are exposed to the outside environment. One example of an unducted aircraft engine is described below with respect to FIG. 6 and another with respect to FIG. 7.

The memory 908 is any type of electronic memory storage device. The memory 908 (and any of the memory devices described herein) can include any one or combination of volatile memory elements (e.g., random access memory (RAM), such as dynamic RAM (DRAM), static RAM (SRAM), synchronous dynamic RAM (SDRAM), video RAM (VRAM), and so forth) and/or nonvolatile memory elements (e.g., read only memory (ROM), hard drive, tape, CD-ROM, and so forth). Moreover, the memory may incorporate electronic, magnetic, optical, and/or other types of storage media. The memory 908 can also have a distributed architecture, where various components are situated remotely from one another, but can be accessed by the controller 906.

The model 910 is stored in the memory 908. The model 910 may be implemented in any format and may include information that describes the thrust or other operational characteristics of the aircraft engine 904. In examples, the model 910 is an electronic file and includes information concerning the test results. In other examples, the model 910 may include equations for the calculation of thrust. In still other examples, the model 910 may be a machine learning model (e.g., a neural network). The model 910 may be built into the controller 906.

As mentioned, the controller 906, memory 908, and model 910 may be disposed in a stand-alone electronics device. Alternatively, the controller 906, memory 908, and model 910 may be disposed on a device that is directly coupled to or at the aircraft engine 904. The controller 906 couples to the memory 908 and the testing hardware 902. It will be appreciated that as used herein the term "controller" refers broadly to any microcontroller, computer, or processor-based device with processor, memory, and programmable input/output peripherals, which is generally designed to govern the operation of other components and devices. It is further understood to include common accompanying accessory devices, including memory, transceivers for communication with other components and devices, etc. These architectural options are well known and understood in the art and require no further description here. The controller 906 may be configured (for example, by using corresponding programming stored in a memory as will be well understood by those skilled in the art) to carry out one or more of the steps, actions, and/or functions described herein. The controller 906 may include a memory that includes computer instructions that implement any of the functions described herein.

It should be understood that the controllers (e.g., the controller 906) provided herein may implement the various functionality described herein. In terms of hardware architecture, such a controller can include but is not limited to a processor, a memory, and one or more input and/or output (I/O) device interface(s) that are communicatively coupled via a local interface. The local interface can include, for example but not limited to, one or more buses and/or other wired or wireless connections. The controller 906 may be a hardware device for executing software, particularly software stored in a memory. The controller 906 can be a custom made or commercially available processor, a central processing unit (CPU), an auxiliary processor among several processors associated with the computing device, a semiconductor-based microprocessor (in the form of a microchip or chip set) or generally any device for executing software instructions.

The controller 906 may implement the functions described herein in any combination of hardware and software (e.g., with the software being executed by the controller 906). The software may be stored in any memory device and may include one or more separate programs, each of which includes an ordered listing of executable instructions for implementing the functions described herein. When constructed as a source program, the program is translated via a compiler, assembler, interpreter, or the like, which may or may not be included within the memory.

It will be appreciated that at least some portions of the approaches described herein can be implemented at least in part as computer instructions stored on a computer media (e.g., a computer memory as described above) and these instructions can be executed on a controller such as a microprocessor. However, as mentioned, these approaches can be implemented as any combination of electronic hardware and/or software.

In operation during the ground testing, the aircraft engine 904 is positioned on the ground test stand and testing is performed. One goal of the on-ground testing is to determine any residual errors or unaccounted for behaviors (whatever the source) in the aircraft engine 904. For a given set of parameters, the aircraft engine 904 is run (e.g., at full power) and torque and thrust are measured using the engine control torque sensor 905 and other engine sensors 907. For example, the other engine sensors 907 may include pressure, temperature, shaft speeds, and volumetric fuel meters can be used to evaluate core thrust and other thrust produced by other airstreams or exhaust streams produced by the aircraft engine 904.

When performing the ground test, testing the engine may occur on the ground in the open air (outside), or on an enclosed test cell disposed indoors. As mentioned and in another example, the aircraft engine 904 the engine test facility includes a structure with a wall. The wall has a hole or opening. The aircraft engine 904 is placed adjacent next to the hole or opening in the wall and the testing occurs. In this example, no special equipment is used. Alternatively, specifically designed hardware may also be used as described elsewhere herein.

In aspects, the thrust of the aircraft engine 904 is directly measured using redundant sensors 909 (e.g., strain gages). Environmental sensors 911 measure environmental parameters to fully correct the thrust and account for the environmental conditions. The environmental parameters may include wind direction, wind velocity, ambient temperature, ambient pressure, humidity, engine pressure in front of the propellers and engine exhaust pressures.

During the on the ground testing, the aircraft engine 904 is run at full power. By "full power," it is meant that the engine is run rated power levels at sea-level flight velocity conditions producing maximum net thrust for takeoff, maximum continuous, and maximum climb.

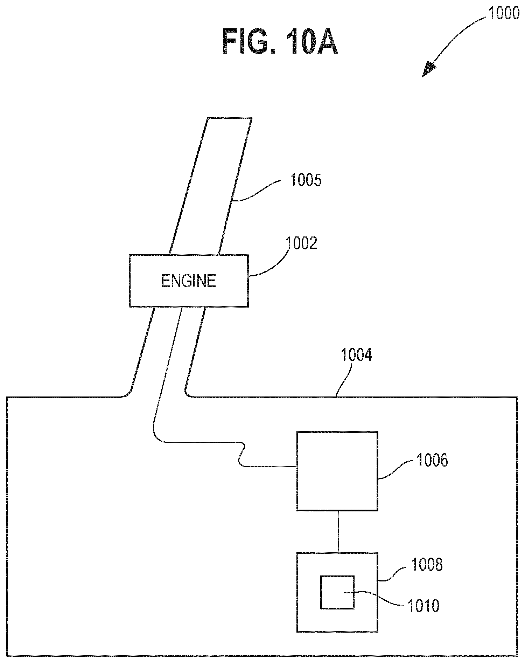

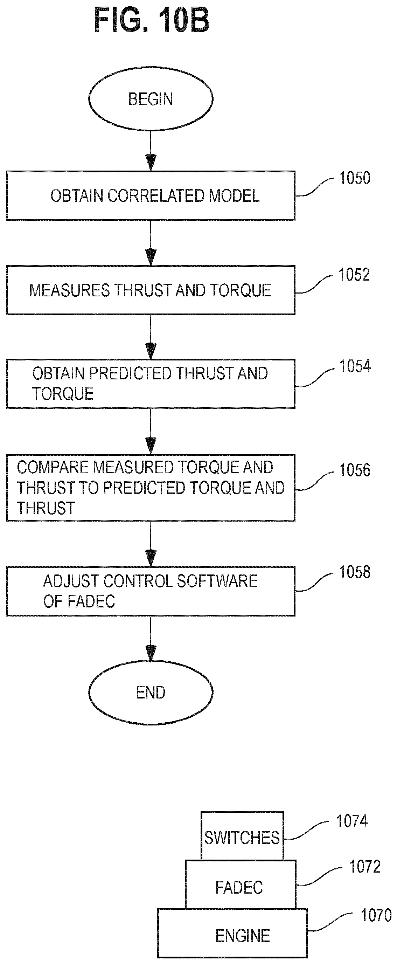

The sensed readings are compared (by a data reduction analysis program executed by the controller 906) to the thrust and torque predicted by the model 910. The differences can be considered errors and can be used by the controller 906 to create a modifier or modifiers (or other adjustment factors) that are used in the analytical model to accurately calculate thrust. Multiple modifiers may also be calculated or determined by the controller 906 based upon the operational state of the aircraft. For example, one modifier may be calculated for takeoff conditions, another modifier for idle conditions, and another modifier for cruising conditions. The modifiers are incorporated into the model 910 to form a correlated model of the aircraft engine 904. After the on-ground testing is finished, on-board (e.g., in-flight) testing is performed as described with respect to FIG. 10A and 10B.

In one example, the model models torque as Torque = f1 (E, F, G), where E is a combustor pressure and F is a combustor temperature, and G is a fuel flow. In another example, the model models thrust as Thrust= f2 (A, B, C, D), where A is a propeller inlet pressure, B is a propeller shaft speed, C is a propeller blade pitch angle of a fan blade, and D is a fan guide vane angle. f1 and f2 are mathematical functions (that may be equations, sets of equations, or other constructs) that, when the input values (e.g., A, B, C, D, E, F, and G) are applied yield results (torque in the case of f1 and thrust in the case of f2). The exact equations, sets of equations used depends upon the nature of the engine being tested.

Accordingly, the model 910 can be used by the controller 906 to calculate a predicted torque and predicted thrust using the measured parameters A, B. C, D, E, F and G and applying the parameters to the functions f1 and f2. Torque and thrust are then measured directly from the engine (by appropriate sensors or measurement devices at or in the aircraft engine 904) and compared by the controller 906 to predicted thrust and torque.

In aspects, a manual (or in some examples, an automatic) process is used to determine or decide whether to apply a modifier (and the value of the modifier) to the measured A, B. C, D, E, F, or G components of the model. The determination might be based on previous experience or historic data, reliability and known accuracy of the sensors measuring the A, B, C, D, E, F, and G values. For example, a particular type of sensor might be known for having inaccurate values, so a modifier might be added to adjust values received from this type of sensor and thereby account for and compensate for these inaccuracies. The value of the modifier, in this example, might be chosen based upon a known amount of the inaccuracy.

If the process is a manual process, then results of the comparison may be presented to a user or operator at a user interface (e.g., computer or smartphone). The user or operator can then determine whether to apply a modifier or modifiers to the model and, more specifically, to the measured A, B. C, D, E, F, or G components of the model. If the process is automatic, the controller 906 may analyze the results of the comparison and determine whether to apply one or more modifiers to the measured A, B. C, D, E, F, or G components of the model.

Referring now to FIG. 10A, one example of a system 1000 to perform the on-board (e.g., in-flight) testing is described. An aircraft engine 1002 (e.g., an unducted aircraft engine) is positioned on-board an aircraft 1004 (such as on a wing 1005 of the aircraft). A controller 1006 is coupled to a memory 1008 and the aircraft engine 1002 (and sensors on the aircraft engine 1002). The memory 1008 includes a correlated model 1010. The controller 1006 and the memory 1008 may be devices already existing aboard the aircraft 1004 or may be only temporarily installed aboard the aircraft 1004 for the on-board testing. In other examples, the controller 1006 and the memory 1008 may be incorporated into a testing device (e.g., a laptop or smart phone) that can be carried aboard the aircraft 1004. In aspects, the controller 1006, the memory 1008, and the correlated model 1010 comprise data reduction tool. Numerical propulsion system simulation (NPSS) software is one example of a data reduction tool that can be used.

The controller 1006, the memory 1008, and the correlated model 1010 may be disposed in an electronic device such as a personal computer, laptop, or smart phone. This device may be in the aircraft 1004, or alternatively on the ground.

The aircraft 1004 is any type of aircraft. In aspects, the aircraft engine 1002 is an unducted aircraft engine such that the bypass fan is not enclosed within a nacelle or fan duct. Examples of unducted aircraft engines are described below with respect to FIG. 6 and FIG. 7.

The memory 1008 is any type of electronic memory storage device. The correlated model 1010 includes or incorporates modifiers and can be obtained from the process described with respect to FIG. 8.

During this on-board test, the correlated model 1010 is utilized by the controller 1006 to calculate thrust. Readings from sensors on the aircraft engine 1002 can be sent to the controller 1006, where thrust can be calculated.

In one example, the aircraft engine 1002 creates or has three air or exhaust streams producing thrust. Thrust X is the propeller thrust modeled using the correlated model, which includes the modifiers obtained during ground testing. Thrust Y may be from an air stream flowing through the engine core and Thrust Z is from a "third" stream around the core but still in the engine. The total calibrated thrust is Thrust = Thrust X + Thrust Y +Thrust Z. In aspects, the thrust in the X stream is calculated using the correlated model 1010 by the controller 1006. Thrust Y and Thrust Z can be calculated by the controller 1006 using readings from other aircraft and engine sensors to determine the thrust produced by these other streams. The controller 1006 can then sum the thrust components to obtain the total calibrated thrust.

Once the total calibrated thrust is determined, it can be compared to ratings or needs that are required by an aircraft manufacturer or operator. For example, the total calibrated thrust may be below the rated thrust for the aircraft 1004. Consequently, selected equipment, parts, or components in the aircraft 1004 or aircraft engine 1002 can be examined, and adjustments made to these devices to thereby adjust the thrust (e.g., increase the thrust) provided by the aircraft engine 1002 to the aircraft 1004.

Referring now to FIG. 10B, one example of an approach for testing production engines is described.

At step 1050, a correlated analytical model of an unducted aircraft engine (e.g., obtained using the process associated with step 806 of FIG. 8). The unducted aircraft engine includes an engine control torque sensor. The unducted aircraft engine is run at full power during a ground test. Full power is the power of the engine required at takeoff of the aircraft. The unducted aircraft engine is tested using testing hardware that simulates at least some flight-like or operational conditions for the unducted aircraft engine during the ground test.

A production unducted aircraft engine 1070 is being manufactured. The production unducted aircraft engine 1070 includes a FADEC device 1072 disposed at the production unducted aircraft engine 1070 that controls operations of the production unducted aircraft engine 1070. Pins or switches 1074 are coupled to the FADEC device 1072. The settings of the pins or switches 1074 are read or sensed by the FADEC device 1072.

The FADEC device 1072 implements control software for production unducted aircraft engine 1070. The settings of the pins or switches 1074 adjust or control the operation of the control software. In aspects, the FADEC device 1072 is a computer or other processing device that controls engine operations. For example, engine timing, the angle to set propellers or fan blades, when to open or close engine valves, and how much fuel goes into combustor of the production unducted aircraft engine 1070 may be controlled by the FADEC device 1072.

At step 1052, the thrust of the production unducted aircraft engine 1070 is directly measured during the ground test to obtain a measured thrust. The torque of the production unducted aircraft engine 1070 is measured during the ground test using an engine control torque sensor of the production unducted aircraft engine 1070 to obtain a measured torque. The measurements may be obtained as described elsewhere herein.

At step 1054, a predicted torque and a predicted thrust of the production unducted aircraft engine 1070 are obtained using the correlated analytical model. At step 1056, the measured torque is compared to the predicted torque and the measured thrust is compared to the predicted thrust to obtain comparison results.

Steps 1054 and 1056 may be performed by a personal computer, laptop, smartphone or similar electronic device.

At step 1058 and based upon the comparison results, the control software for the production unducted aircraft engine is selectively adjusted. This adjustment may include the manual or automatic opening and closing of pins or switches 1074 that control or affect operations of the FADEC device 1072. The process of FIG. 10B can be performed on all or only a selected group of production engines.

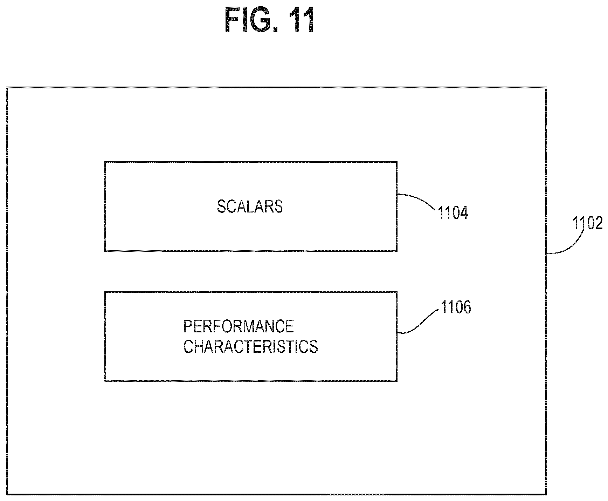

Referring now to FIG. 11, one example of a correlated model 1102 is described. The correlated model 1102 may be in the form of an electronic file (e.g., including data, equations, etc.), one or more equations, and/or may be a machine learning model (e.g., a neural network) with various layers, weightings, and other structures to mention a few examples.

The correlated model 1102 may model performance of an aircraft engine (e.g., an unducted aircraft engine) that has been ground tested (e.g., using the process described with respect to FIG. 9). In one example, the correlated model 1102 is an electronic file that includes modifiers 1104 and engine performance characteristics 1106. In another example, the correlated model 1102 is a structure (e.g., a machine learning model such as a neural network) that receives certain inputs and produces a thrust as the output. In this case, the machine learning model may be trained at least in part according to the modifiers 1104 and engine performance characteristics 1106 to produce a calibrated thrust (or potentially other parameters).

As mentioned, the correlated model 1102 includes or incorporates the modifiers 1104. In one example, the modifiers 1104 are determined according to the approaches described with respect to step 806 of FIG. 8 and the approaches described with respect to FIG. 9.

A variety of modifiers may be calculated based upon the operational state of the aircraft and all of these modifiers 1104 incorporated into the correlated model 1102. For example, one modifier may be calculated for takeoff conditions, another modifier for idle conditions, and yet another modifier for cruising conditions. The modifiers 1104 are incorporated into the correlated model 1102 to form a correlated model describing the performance of the engine.

The modifiers 1104 may also be correlated or associated with specific sensors represented by the model. For example, one modifier (e.g., an adder) may be associated with a speed sensor. When associated with the speed sensor, the correlated model 1102 will indicate that speed readings obtained from that sensor should have their readings modified by the adder by adding the value of the adder to these readings.

In another example, the measurements are not directly modified. Other portions of the analytic engine behavior are adjusted to bring the correlated model 1102 into calibration with the measurements. For example, if originally the Thrust is modeled by the correlated model 1102 to be Thrust = A+B (where A and B are sensor measurements values), then the modeled thrust can be adjusted to be Thrust = (A+B)/M (where A and B are sensor measurements and M is a numeric modifier).

The correlated model 1102 also includes or incorporates the engine performance characteristics 1106. For a particular power applied to the fan blades or the propeller, a particular pitch angle of the propeller, and/or other parameters, the engine performance characteristics 1106 describe how much thrust will be provided by the propeller and the efficiency of the engine.

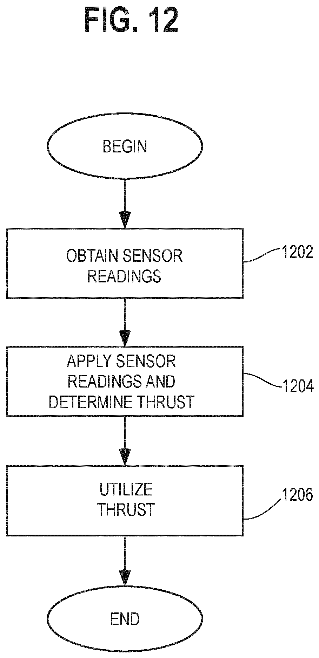

Referring now to FIG. 12, one example of implementing the aircraft testing phase of an aircraft engine is described. In one example, the approach of FIG. 12 implements step 808 of FIG. 8.

At step 1202, sensor readings from sensors in or at the aircraft engine are obtained. A pressure sensor at the aircraft engine may measure pressure. A temperature sensor at the aircraft engine may measure temperature. An engine shaft speed sensor at the aircraft engine may measure engine speed. The calibrated engine control torque sensor at the aircraft engine measures a highly accurate torque. As mentioned, the pressure sensor, the engine shaft speed sensor, and the calibrated engine control torque sensor are deployed in or at the aircraft engine.

At step 1204, the sensor readings are applied and/or utilized with a correlated model to obtain, calculate or determine a thrust for the aircraft. In one example, power, rpm, angle, and torque can be measured to determine thrust. The thrust determination can be performed by a controller that is deployed at a personal computer, laptop, or smart phone in or at the aircraft that is being tested. In another example, the controller may be deployed at devices (e.g., personal computers, laptops, or smartphones) on the ground (not in the aircraft) and a wireless communication system may communicate the readings of the sensors to the controller in the on-the-ground devices.

At step 1206, the determined thrust can be utilized for various purposes. The determined thrust can be compared to desired thrust. For example, a desired thrust rating may be provided by an aircraft engine manufacturer and this can be compared to the determined thrust.

Adjustments to the engine can then be made knowing that the above-mentioned process has been utilized to produce highly accurate thrust calculations. For example, different engine components may be inspected, maintained, monitored, replaced, and/or adjusted to increase (or decrease) the thrust of the engine based upon the results of the comparison. The inspection, maintenance, monitoring, repair, and/or adjustment, in aspects, modifies the operation of the engine and, in some instances, brings the engine's operating characteristics (e.g., thrust) to desired values. In one example, the FADEC device control schedule can be adjusted.

Further aspects of the present disclosure are provided by the subject matter of the following clauses: A system for static testing, the system comprising: a flow conditioning structure disposed about a central axis of an unducted thrust producing apparatus, wherein the unducted thrust producing apparatus has a propeller that generates thrust in a working fluid by rotating about the central axis, the propeller being comprised of blades each with a free end remote from the central axis, each blade also having a leading edge where the working fluid enters during forward thrust operation; and wherein the flow conditioning structure comprises a structure forming a passage and the structure forming the passage is configured to be effective to control a speed and a direction of the working fluid drawn into the unducted thrust producing apparatus so as to approximate operational speeds and operational directions of the working fluid entering the unducted thrust producing apparatus during operations of a vehicle.

The system of any of the preceding clauses, wherein a propeller tip is located at an intersection of the free end and the leading edge; wherein a first surface of the flow conditioning structure, and a second surface of the flow conditioning structure or the unducted thrust producing apparatus form the passage; wherein the first surface guides the working fluid that is between the first surface and the central axis and the second surface guides the working fluid that is between the second surface and the first surface; wherein a passage length (L) is defined as a straight-line distance from a forward-most point of the first surface and a point on the first surface nearest to the propeller tip; wherein passage height (H) is defined as a distance between the first surface and the second surface; and wherein L/H > 1.0.

The system of any of the preceding clauses, wherein a propeller tip radius (R) is a distance of the propeller tip from the central axis; wherein, for a surface of the flow conditioning structure that is nearest to the propeller tip, the point on the surface that is nearest to the propeller tip has a distance (S) from the central axis; and wherein S/R < 1.2.

The system of any of the preceding clauses, wherein the point along the surface of the flow conditioning structure that is nearest to the propeller tip has axial distance, G, from the propeller tip; and wherein G/R < 0.2.

The system of any of the preceding clauses, wherein the flow conditioning structure includes a vane disposed along an inner surface of the flow conditioning structure between the flow conditioning structure and the central axis.

The system of any of the preceding clauses, wherein the vane has height (V) measured perpendicular to the central axis from attachment to the surface of the flow conditioning structure to an opposite end of the vane; and wherein V/R < 0.2.

The system of any of the preceding clauses, wherein the vane imparts a swirl in a direction of rotation of the propeller; and wherein the swirl is greater than 5 degrees over 70% of a vane span of the vane.

The system of any of the preceding clauses, wherein the flow conditioning structure comprises a bell mouth.

The system of any of the preceding clauses, wherein the flow conditioning structure comprises a nacelle-type inlet or a rounded inlet.

The system of any of the preceding clauses, further comprising a fan bank that is configured to provide a flow of the working fluid to the unducted thrust producing apparatus; wherein the flow conditioning structure is positioned between the fan bank and the unducted thrust producing apparatus.

The system of any of the preceding clauses, wherein the flow conditioning structure is connected to the fan bank.

The system of any of the preceding clauses, wherein a surface of the flow conditioning structure that is nearest to the propeller tip includes a pocket extending over the propeller tip.

The system of any of the preceding clauses, wherein the surface that has the pocket that extends over the propeller tip also extends aft to cover all blades of the unducted thrust producing apparatus.

The system of any of the preceding clauses, wherein the surface that has the pocket that extends over the propeller tip also extends downstream of all blades of the unducted thrust producing apparatus.

The system of any of the preceding clauses, wherein the flow conditioning structure has an aft end and a diffuser is located at the aft end.

The system of any of the preceding clauses, wherein the unducted thrust producing apparatus is an aircraft engine used by an aircraft; wherein the propeller of the unducted thrust producing apparatus absorbs greater than 75% of a power that corresponds to a takeoff condition of the aircraft.

The system of any of the preceding clauses, wherein the aircraft travels at a Mach number greater than 0.7 and wherein a cruise propeller power coefficient > 2.

The system of any of the preceding clauses, wherein the propeller of the thrust producing apparatus absorbs power for a power coefficient > 1.

The system of any of the preceding clauses, further comprising a non-passive flow conditioning structure, the non-passive flow conditioning structure cooperating with the flow conditioning structure to control the speed and the direction of the working fluid drawn into the unducted thrust producing apparatus.

The system of any of the preceding clauses, further comprising a stiffening ring arranged about the flow conditioning structure.

A method of on-ground testing of an unducted aircraft engine, the method comprising: providing an unducted thrust producing apparatus having a propeller that generates thrust in a working fluid by rotating about a central axis, the propeller being comprised of blades each with a free end, each blade having a propeller tip at the free end, the propeller tip being remote from the central axis, each blade also having a leading edge where the working fluid enters during forward thrust operation; disposing a flow conditioning structure about the central axis in proximity to the unducted thrust producing apparatus; and controlling a speed and a direction of the working fluid drawn into the unducted thrust producing apparatus by the flow conditioning structure so as to approximate operational speeds and operational directions of the working fluid entering the unducted thrust producing apparatus during operations of a vehicle.

A method of on-ground testing of an unducted aircraft engine, the method comprising: providing an unducted thrust producing apparatus having a propeller that generates thrust in a working fluid by rotating about a central axis, the propeller being comprised of blades, each with a free end and a leading edge where the working fluid enters during a forward thrust operation, wherein the propeller tip corresponds to the axial and radial location of the intersection of the free end and the leading edge; disposing a flow conditioning structure about the central axis in proximity to the unducted thrust producing apparatus; and controlling a speed and a direction of the working fluid drawn into the unducted thrust producing apparatus by the flow conditioning structure so as to approximate operational speeds and operational directions of the working fluid entering the unducted thrust producing apparatus during operations of a vehicle.

Those skilled in the art will recognize that a wide variety of modifications, alterations, and combinations can be made with respect to the above-described embodiments without departing from the scope of the disclosure, and that such modifications, alterations, and combinations are to be viewed as being within the ambit of the disclosure concept.

**Claims**

1. A system (100) for ground testing of an unducted thrust producing apparatus (102), the system comprising:

an unducted thrust producing apparatus (102) configured to, in use, provide forward thrust operation to a vehicle, the unducted thrust producing apparatus (102) comprising a propeller that generates thrust in a working fluid (503) by rotating about a central axis (146), the propeller comprising blades (140), wherein each blade has a free end remote from the central axis and a leading edge (133) where the working fluid (503) enters during the forward thrust operation, wherein the blades (140) are not surrounded by a duct;

a flow conditioning structure (104) arranged substantially upstream from the blades (140) of the unducted thrust producing apparatus (102) and disposed about the central axis (146) of the unducted thrust producing apparatus (102);

wherein the flow conditioning structure (104) comprises a duct, the duct forming at least one passage that is configured to, during a ground test of the unducted thrust producing apparatus (102), be effective to control a speed and a direction of the working fluid drawn into the unducted thrust producing apparatus (102) so as to approximate operational speeds and operational directions of the working fluid (503) entering the unducted thrust producing apparatus (102) during operations of the vehicle.

2. The system of claim 1, wherein the duct comprises a plurality of concentric rings (572, 574, 576, and 578).

3. The system of claim 2, wherein the rings are coupled together with struts.

4. The system of claim 2, wherein a propeller tip is located at an intersection of the free end and the leading edge (133) of the blades (140);

wherein a propeller tip radius (R) is a distance of the propeller tip from the central axis (146); wherein, for a surface of an outermost ring of the rings that is nearest to the propeller tip, a point on the surface of the outermost ring that is nearest to the propeller tip has a distance (S) from the central axis; and wherein S/R < 1.2.

5. The system of claim 4, wherein first surfaces of the flow conditioning structure (104), and second surfaces of the flow conditioning structure (104) or the unducted thrust producing apparatus (102) form the passages that guide the working fluid (503) that is between the second surface and the first surface;

wherein a passage length (L) is defined as a straight-line distance from a forward-most point of the first surfaces and a point on the first surfaces nearest to the propeller tip; wherein passage height (H) is defined as a distance between the first surfaces and the second surfaces; and wherein L/H > 1.0.

6. The system of claim 5, wherein the point along the surface of the flow conditioning structure (104) that is nearest to the propeller tip has axial distance, G, from the propeller tip; and wherein G/R < 0.2.

7. The system of any preceding claim, further comprising a fan bank (585) that is configured to provide a flow of the working fluid (503) to the unducted thrust producing apparatus (102);
wherein the flow conditioning structure (104) is positioned between the fan bank (585) and the unducted thrust producing apparatus (102) and wherein the flow conditioning structure (104) is connected to the fan bank (585).

8. The system of any preceding claim, wherein the unducted thrust producing apparatus is an aircraft engine used by an aircraft; wherein the propeller of the unducted thrust producing apparatus (102) absorbs greater than 75% of a power that corresponds to a takeoff condition of the aircraft.

9. The system of any preceding claim, wherein the aircraft travels at a Mach number greater than 0.7 and wherein a cruise propeller power coefficient > 2.

10. The system of any preceding claims, wherein the propeller of the thrust producing apparatus (102) absorbs power for a power coefficient > 1.

11. The system of claim 1, further comprising a non-passive flow conditioning structure (1352, 1350).

12. The system of claim 1, wherein the duct comprises an inner duct positioned within an outer duct.

13. The system of claim 12, wherein the inner duct and the outer duct are offset circumferentially from the central axis (146) at different radii.

EP 4 707 766 A1

# FIG. 1A

FIG. 1B

EP 4 707 766 A1

FIG. 1C

EP 4 707 766 A1

# FIG. 1D

# FIG. 2A

FIG. 2B

FIG. 2C

202

222

220

204

FIG. 2D

EP 4 707 766 A1

## FIG. 2E

EP 4 707 766 A1

FIG. 2F

FIG. 3A

# FIG. 3B

# FIG. 4

BEGIN

↓

POSITION UNDUCTED ENGINE ⟩ 402

↓

ASSOCIATED TESTING HARDWARE TO UNDUCTED ENGINE ⟩ 404

↓

TEST UNDUCTED ENGINE ⟩ 406

↓

END

# FIG. 5A

EP 4 707 766 A1

# FIG. 5B

FIG. 5C

EP 4 707 766 A1

**FIG. 5D**

EP 4 707 766 A1

FIG. 5E

# FIG. 5F

EP 4 707 766 A1

FIG. 5G

# FIG. 5H

EP 4 707 766 A1

FIG. 5I

FIG. 5J

# FIG. 5K

EP 4 707 766 A1

FIG. 5L

EP 4 707 766 A1

FIG. 5M

# FIG. 5N

# FIG. 5O

FIG. 5P

FIG. 5Q

# FIG. 5R

EP 4 707 766 A1

FIG. 6

EP 4 707 766 A1

EP 4 707 766 A1

# FIG. 7

# FIG. 8

```
        ┌─────────────┐
        │    BEGIN    │
        └─────────────┘
               │
               ▼
   ┌───────────────────────┐
   │  SCALE MODEL TESTING  │──── 802
   │     AND ANALYSIS      │
   └───────────────────────┘
               │
               ▼
   ┌───────────────────────┐
   │    TORQUE SENSOR      │──── 804
   │     CALIBRATION       │
   └───────────────────────┘
               │
               ▼
   ┌───────────────────────┐
   │   ON-GROUND TESTING   │──── 806
   └───────────────────────┘
               │
               ▼
   ┌───────────────────────┐
   │   ON-BOARD AIRCRAFT   │──── 808
   │       TESTING         │
   └───────────────────────┘
               │
               ▼
        ┌─────────────┐
        │     END     │
        └─────────────┘
```

# FIG. 9

# FIG. 10A

# FIG. 10B

BEGIN

OBTAIN CORRELATED MODEL — 1050

MEASURES THRUST AND TORQUE — 1052

OBTAIN PREDICTED THRUST AND TORQUE — 1054

COMPARE MEASURED TORQUE AND THRUST TO PREDICTED TORQUE AND THRUST — 1056

ADJUST CONTROL SOFTWARE OF FADEC — 1058

END

SWITCHES — 1074

FADEC — 1072

ENGINE — 1070

# FIG. 11

# FIG. 12

```
            ┌─────────────┐
            │    BEGIN     │
            └──────┬──────┘
                   │
                   ▼
         ┌───────────────────┐
         │  OBTAIN SENSOR    │──── 1202
         │    READINGS       │
         └─────────┬─────────┘
                   │
                   ▼
         ┌───────────────────┐
         │  APPLY SENSOR     │
         │  READINGS AND     │──── 1204
         │ DETERMINE THRUST  │
         └─────────┬─────────┘
                   │
                   ▼
         ┌───────────────────┐
         │     UTILIZE       │──── 1206
         │     THRUST        │
         └─────────┬─────────┘
                   │
                   ▼
            ┌─────────────┐
            │     END      │
            └─────────────┘
```

FIG. 13A

# FIG. 13B

EP 4 707 766 A1

FIG. 13C

# FIG. 13D

EP 4 707 766 A1

FIG. 13E

FIG. 13F

FIG. 13G

1304

**FIG. 13H**

1304

Europäisches
Patentamt

European
Patent Office

Office européen
des brevets

## EUROPEAN SEARCH REPORT

**Application Number**

EP 25 20 2967

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 811 364 A (OLSHEVSKY DIMITRY E) 23 June 1931 (1931-06-23) | 1-3,7-12 | INV. G01M9/06 |
| A | * embodiment of fig. 1 * | 4-6,13 | G01M15/14 B64F5/60 |
| | ----- | | |
| X | Geyer Thomas ET AL: "Design and Construction of a Test Stand for Noise Measurements on Model Propellers", , 1 January 2013 (2013-01-01), pages 1888-1891, XP093075630, Retrieved from the Internet: URL:https://www.researchgate.net/publicati on/263674222_Design_and_Construction_of_a_ Test_Stand_for_Noise_Measurements_on_Model _Propellers [retrieved on 2023-08-22] | 1-3,7-12 | |
| A | embodiments of fig. 4 and 5; * abstract * | 4-6,13 | |
| | ----- | | |

**TECHNICAL FIELDS SEARCHED (IPC)**

G01M
B64C
B64F
B64D
F01D

The present search report has been drawn up for all claims

| Place of search | Date of completion of the search | Examiner |
|---|---|---|
| The Hague | 19 January 2026 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2967

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | Publication date |
|---|---|---|---|
| US 1811364 A | 23-06-1931 | NONE | |

For more details about this annex : see Official Journal of the European Patent Office, No. 12/82

EPO FORM P0459

**REFERENCES CITED IN THE DESCRIPTION**

**Patent documents cited in the description**

- US 63328537